# EUROPEAN PATENT APPLICATION

(11) **EP 4 730 696 A1**
(43) Date of publication of application: **22.04.2026**
(21) Application number: 24822234.1
(22) Date of filing: 02.02.2024
(51) Int. Cl.: H04L 9/08

(54) **DATA ENCRYPTION AND DECRYPTION METHOD, APPARATUS, DEVICE, AND SYSTEM, AND STORAGE MEDIUM**

(30) Priority: 16.06.2023 CN 202310723993
(71) Applicant: China Unionpay Co., Ltd., Shanghai 200135 (CN)
(72) Inventor: XU, Zhu, Shanghai 200135 (CN); ZHA, Jun, Shanghai 200135 (CN); TANG, Xudong, Shanghai 200135 (CN); JIANG, Bo, Shanghai 200135 (CN); ZHOU, Ruiqi, Shanghai 200135 (CN); XU, Yong, Shanghai 200135 (CN); WANG, Xu, Shanghai 200135 (CN)
(74) Representative: Grünecker Patent- und Rechtsanwälte PartG mbB
(86) International application number: PCT/CN2024/075436
(87) International publication number: WO 2024/255274

(57) **Abstract**

The present application discloses a data encryption and decryption method, an apparatus, a device, a system and a storage medium, belonging to the field of data processing. The method comprises: in response to being called by an encryption and decryption execution platform based on a key mapping relationship, and receiving an encryption and decryption request sent by the encryption and decryption execution platform, wherein: the key mapping relationship is maintained by a key management platform, and comprises a mapping relationship of a target master key physical index, a master key unique identifier, an encryption machine cluster identifier and a master key physical index; the encryption and decryption request comprises data to be processed and target working key indication data, the data to be processed comprising data to be encrypted or data to be decrypted, and the target working key indication data being used to indicate a target working key ciphertext; decrypting the target working key ciphertext using the first target master key, to obtain a target working key; encrypting or decrypting the data to be processed by using the target working key, to obtain result data; and feeding back the result data to the encryption and decryption execution platform.

## Description

### CROSS-REFERENCE TO RELATED APPLICATIONS

The present application claims priority to Chinese Patent Application No. 202310723993.4, filed on June 16, 2023, titled "DATA ENCRYPTION AND DECRYPTION METHOD, APPARATUS, DEVICE, SYSTEM AND STORAGE MEDIUM", the entire content of which is incorporated herein by reference.

### TECHNICAL FIELD

The present application relates to the field of data processing, and particularly relates to a data encryption and decryption method, an apparatus, a device, a system and a storage medium.

### BACKGROUND ART

With the development of information network technology, more and more services need to collect user data and process the data to complete the services. However, some data is private, data security of which is one of the key points that need attention.

To improve data security, a working key may be used to encrypt data. When data sharing is required, the encrypted data and the key are transmitted; when decryption is required, the working key is employed again to decrypt the encrypted data to obtain the plaintext of the data. However, the working key required by the encrypting party and the decrypting party for data encryption and decryption is exposed in plaintext, putting the working key at risk of leakage. If the working key is leaked, huge security risks will be brought to the data.

### SUMMARY

Embodiments of the present application provide a data encryption and decryption method, an apparatus, a device, a system and a storage medium, which can avoid working key leakage and improve data security.

In a first aspect, an embodiment of the present application provides a data encryption and decryption method applied to an encryption machine having a first target master key, the method including: in response to being called by an encryption and decryption execution platform based on a key mapping relationship, and receiving an encryption and decryption request sent by the encryption and decryption execution platform, where: the key mapping relationship is maintained by a key management platform, and includes a mapping relationship of a master key unique identifier, an encryption machine cluster identifier and a master key physical index; the encryption and decryption request includes a target master key physical index, data to be processed and target working key indication data, the target master key physical index being a master key physical index of the first target master key, the data to be processed including data to be encrypted or data to be decrypted, and the target working key indication data being used to indicate a target working key ciphertext; decrypting the target working key ciphertext using the first target master key, to obtain a target working key; encrypting or decrypting the data to be processed by using the target working key, to obtain result data; and feeding back the result data to the encryption and decryption execution platform.

In a second aspect, an embodiment of the present application provides a data encryption and decryption method applied to an encryption and decryption execution platform, the method including: calling an encryption machine having a first target master key based on a key mapping relationship maintained by a key management platform, the key mapping relationship including a mapping relationship of a master key unique identifier, an encryption machine cluster identifier, and a master key physical index; sending an encryption and decryption request to the encryption machine, where the encryption and decryption request includes a target master key physical index, data to be processed, and target working key indication data, the target master key physical index being the master key physical index of the first target master key, the data to be processed including data to be encrypted or data to be decrypted, the target working key indication data being used to indicate a target working key ciphertext, and the encryption and decryption request being used to cause the encryption machine to decrypt the target working key ciphertext using the first target master key to obtain a target working key, and to encrypt or decrypt the data to be processed using the target working key to obtain result data; and receiving the result data fed back by the encryption machine.

In a third aspect, an embodiment of the present application provides a data encryption and decryption method applied to a key management platform, the method including: interacting with an encryption and decryption execution platform, so that the encryption and decryption execution platform calls an encryption machine having a first target master key based on a key mapping relationship maintained by the key management platform, such that the encryption machine decrypts a target working key ciphertext indicated by target working key indication data in an encryption and decryption request by using the first target master key, to obtain a target working key, and then encrypts or decrypts data to be processed in the encryption and decryption request by using the target working key, to obtain result data fed back to the encryption and decryption execution platform, where the key mapping relationship includes a mapping relationship of a master key unique identifier, an encryption machine cluster identifier and a master key physical index, the encryption and decryption request is sent by the encryption and decryption execution platform to the encryption machine, the data to be processed includes data to be encrypted or data to be decrypted, and the encryption and decryption request further includes a target master key physical index, the target master key physical index being the master key physical index of the first target master key.

In a fourth aspect, an embodiment of the present application provides an encryption machine having a first target master key, the encryption machine including: a receiving module, configured to be called by an encryption and decryption execution platform based on a key mapping relationship, and receive an encryption and decryption request sent by the encryption and decryption execution platform, where the key mapping relationship is maintained by a key management platform, and includes a mapping relationship of a master key unique identifier, an encryption machine cluster identifier and a master key physical index, the encryption and decryption request including a target master key physical index, data to be processed and target working key indication data, and the target master key physical index being the master key physical index of the first target master key, where the data to be processed include data to be encrypted or data to be decrypted, and the target working key indication data is used to indicate a target working key ciphertext; an encryption and decryption module, configured to decrypt the target working key ciphertext by using the first target master key, to obtain a target working key, and configured to encrypt or decrypt the data to be processed by using the target working key, to obtain result data; and a sending module, configured to feed back the result data to the encryption and decryption execution platform.

In a fifth aspect, an embodiment of the present application provides a data encryption and decryption apparatus applied to an encryption and decryption execution platform, the apparatus including: a sending module, configured to call an encryption machine having a first target master key based on a key mapping relationship maintained by a key management platform, and send an encryption and decryption request to the encryption machine, where the key mapping relationship includes a mapping relationship of a master key unique identifier, an encryption machine cluster identifier and a master key physical index, the encryption and decryption request includes a target master key physical index, data to be processed and target working key indication data, the target master key physical index being the master key physical index of the first target master key, the data to be processed including data to be encrypted or data to be decrypted, the target working key indication data being used to indicate a target working key ciphertext, where the encryption and decryption request is used to cause the encryption machine to decrypt the target working key ciphertext by using the first target master key, to obtain a target working key, and to encrypt or decrypt the data to be processed by using the target working key, to obtain result data; and a receiving module, configured to receive the result data fed back by the encryption machine.

In a sixth aspect, an embodiment of the present application provides a data encryption and decryption apparatus applied to a key management platform, the apparatus including: a communication module, configured to interact with an encryption and decryption execution platform, so that the encryption and decryption execution platform calls an encryption machine having a first target master key based on a key mapping relationship maintained by the key management platform, such that the encryption machine decrypts a target working key ciphertext indicated by target working key indication data in an encryption and decryption request by using the first target master key, to obtain a target working key, and then encrypts or decrypts data to be processed in the encryption and decryption request by using the target working key, to obtain result data fed back to the encryption and decryption execution platform, where the key mapping relationship includes a mapping relationship of a master key unique identifier, an encryption machine cluster identifier and a master key physical index, the encryption and decryption request being sent by the encryption and decryption execution platform to the encryption machine, and the data to be processed including data to be encrypted or data to be decrypted, where the encryption and decryption request further includes a target master key physical index, the target master key physical index being the master key physical index of the first target master key.

In a seventh aspect, an embodiment of the present application provides an electronic device, including: a processor and a memory storing computer program instructions; where the processor, when executing the computer program instructions, implements the data encryption and decryption method of the first aspect, the data encryption and decryption method of the second aspect, or the data encryption and decryption method of the third aspect.

In an eighth aspect, an embodiment of the present application provides a data encryption and decryption system, including: an encryption machine, configured to execute the data encryption and decryption method according to the first aspect; an encryption and decryption execution platform in communication connection with the encryption machine, configured to execute the data encryption and decryption method according to the second aspect; a key management platform in communication connection with the encryption machine and the encryption and decryption execution platform, configured to execute the data encryption and decryption method according to the third aspect.

In a ninth aspect, an embodiment of the present application provides a computer-readable storage medium storing computer program instructions, where the computer program instructions, when executed by a processor, implement the data encryption and decryption method of the first aspect, the data encryption and decryption method of the second aspect, or the data encryption and decryption method of the third aspect.

Embodiments of the present application provide a data encryption and decryption method, an apparatus, a device, a system and a storage medium. An encryption and decryption execution platform calls an encryption machine having a first target master key based on a key mapping relationship maintained by a key management platform, and sends an encryption and decryption request to the encryption machine, the encryption and decryption request including a target master key physical index, data to be processed, and target working key indication data capable of indicating a target working key ciphertext. The encryption machine may decrypt the target working key ciphertext indicated by the target working key indication data by using a first target master key indicated by the master key physical index, to obtain a target working key, and encrypt or decrypt the data to be processed by using the target working key, to obtain result data; and the encryption and decryption execution platform receives the result data fed back by the encryption machine. In this encryption and decryption process, a plaintext of a working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext. This may prevent the working key from being exposed in plaintext, thereby avoiding working key leakage and improving data security.

### BRIEF DESCRIPTION OF DRAWINGS

To illustrate the technical solutions in the embodiments of the present application more clearly, the following briefly describes the accompanying drawings required for the embodiments of the present application. Those of ordinary skill in the art may further obtain other drawings based on these drawings without the exercise of inventive skill.
FIG. 1 is a schematic diagram of an exemplary application architecture of a data encryption and decryption method provided by an embodiment of the present application;
FIG. 2 is a flowchart of a data encryption and decryption method provided by an embodiment of the first aspect of the present application;
FIG. 3 is a schematic diagram of an example of structured information implemented as a protocol message provided by an embodiment of the present application;
FIG. 4 is a flowchart of a data encryption and decryption method provided by another embodiment of the first aspect of the present application;
FIG. 5 is a flowchart of a data encryption and decryption method provided by an embodiment of the second aspect of the present application;
FIG. 6 is a flowchart of a data encryption and decryption method provided by an embodiment of the third aspect of the present application;
FIG. 7 is a flowchart of a data encryption and decryption method provided by another embodiment of the third aspect of the present application;
FIG. 8 is a schematic diagram of an example of a data encryption and decryption process provided by an embodiment of the present application;
FIG. 9 is a schematic diagram of another example of a data encryption and decryption process provided by an embodiment of the present application;
FIG. 10 is a schematic structural diagram of an encryption machine provided by an embodiment of the fourth aspect of the present application;
FIG. 11 is a schematic structural diagram of a data encryption and decryption apparatus provided by an embodiment of the fifth aspect of the present application;
FIG. 12 is a schematic structural diagram of a data encryption and decryption apparatus provided by an embodiment of the sixth aspect of the present application:
FIG. 13 is a schematic structural diagram of an electronic device provided by an embodiment of the seventh aspect of the present application.

### DETAILED DESCRIPTION OF EMBODIMENTS

Features and exemplary embodiments of various aspects of the present application will be described in detail below. To make the objectives, technical solutions and advantages of the present application clearer, the present application is further described in detail below with reference to the accompanying drawings and specific embodiments. It should be understood that the specific embodiments described herein are only intended to explain the present application, rather than to limit the present application. For those skilled in the art, the present application may be practiced without some of these specific details. The following description of the embodiments is merely intended to provide a better understanding of the present application by illustrating examples of the present application.

With the development of information network technology, more and more services need to collect user data and process the data to complete the services. However, some data is private, the data security of which is one of the key points that need attention. To improve data security, a working key may be used to encrypt data, and the encrypted data is transmitted during the data transmission process; when decryption is required, the working key is employed again to decrypt the encrypted data to obtain the plaintext of the data. However, the working key required by the encrypting party and the decrypting party for data encryption and decryption is exposed in plaintext, putting the working key at risk of leakage. If the working key is leaked, huge security risks will be brought to the data.

The present application provides a data encryption and decryption method, an apparatus, a device, a system and a storage medium, establishing a centralized and distributed combined encryption and decryption service and key management mechanism. Working key indication data capable of indicating a working key ciphertext can be transmitted across systems or platforms. The working key ciphertext is obtained by encrypting a working key with a master key. When encrypting or decrypting data to be processed, an encryption machine acquires the working key ciphertext according to the working key indication data, decrypts the working key ciphertext using its own master key, and then encrypts or decrypts the data to be processed using the decrypted working key. In the entire encryption and decryption process, plaintext of the working key only appears during the encryption and decryption process of the encryption machine and is not transmitted across systems or platforms, which prevents the working key from being exposed in the plaintext, thereby avoiding working key leakage and improving data security.

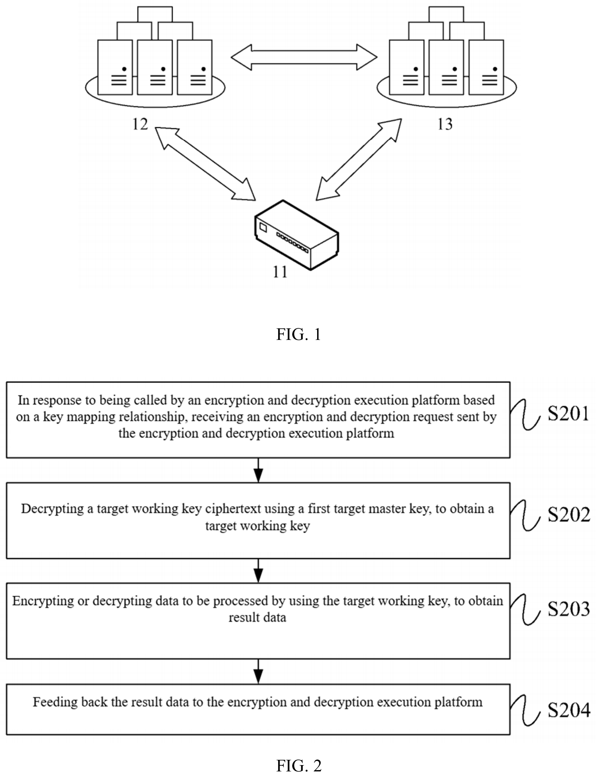

For ease of understanding, the application architecture of the data encryption and decryption method in the embodiments of the present application is described first. FIG. 1 is a schematic diagram of an exemplary application architecture of a data encryption and decryption method provided by an embodiment of the present application. As shown in FIG. 1, the data encryption and decryption method may involve a key management platform 11, an encryption and decryption execution platform 12, and an encryption machine 13.

The key management platform 11 has a Key Management Service (KMS) function, and may perform related maintenance on Master Keys (MKs) and may maintain the sharing, circulation and use of master key unique identifiers that may identify the master keys. The master key can serve as a first-level key intended to protect a working key. The master key may be used to encrypt the working key to obtain a working key ciphertext. The working key is a second-level key intended to protect data security. The working key may be used to encrypt data to be encrypted to obtain a ciphertext of the data to be encrypted. The key management platform 11 may also maintain key mapping relationships related to the master keys, such as maintaining master key unique identifiers, encryption machine cluster identifiers and master key physical indexes. A master key unique identifier is used to identify a master key. One master key has only one master key unique identifier, and the master key unique identifier is unique. The encryption machines in the system may be divided into multiple encryption machine clusters, and a encryption machine cluster identifier is used to identify an encryption machine cluster. Different encryption machine clusters have different encryption machine cluster identifiers. A master key physical index may indicate a physical location of the master key in the encryption machine cluster, and the corresponding master key may be obtained through the master key physical index. The key management platform 11 may interact with the encryption and decryption execution platform 12, enabling the encryption and decryption execution platform to obtain related information in the key mapping relationship required during the encryption and decryption process. The key management platform 11 may also manage lifecycle management of the master keys and working keys. When a master key or working key needs to be replaced, the encryption machine 13 may be called to complete the re-encryption of the master key and the re-encryption of the working key. The key management platform 11 may be implemented by modules, apparatuses, devices, etc.; the type and number of modules, apparatuses, devices, etc. implementing the key management platform 11 are not limited herein.

The encryption and decryption execution platform 12 has an encryption service function and/or a decryption service function. The encryption and decryption execution platform may either belong to an independent encryption and decryption service provider, or belong to a user side that has encryption and/or decryption requirements for data to be processed, which is not limited herein. The encryption and decryption execution platform 12 may determine the encryption machine 13 where the master key corresponding to the working key ciphertext required for encryption or decryption is located based on the key mapping relationship maintained by the key management platform 11, and call the encryption machine 13 to perform encryption or decryption. The encryption and decryption execution platform 12 may be implemented by modules, apparatuses, devices, etc., and the type and number of modules, apparatuses, devices, etc. implementing the encryption and decryption execution platform 12 are not limited herein.

The encryption machine 13 has an encryption function and/or a decryption function, and may encrypt or decrypt the data to be processed. The encryption machine 13 stores the master key. When it is necessary to encrypt or decrypt the data to be processed, the corresponding working key ciphertext may be acquired; the working key ciphertext is decrypted using the master key to obtain the working key; and the working key is used to encrypt or decrypt the data to be processed. The plaintext of the working key will only appear in the encryption machine 13 after the working key ciphertext is decrypted using the master key, and the plaintext of the working key will not be transmitted outside the encryption machine 13. The encryption machine 13 may belong to the same entity as the encryption and decryption execution platform 12, or may belong to the same entity as the key management platform 11, or may further be independent of the encryption and decryption execution platform 12 and the key management platform 11, which is not limited herein.

The data encryption and decryption method, apparatus, device, system and storage medium provided by the present application will be described separately below.

A first aspect of the present application provides a data encryption and decryption method, applied to an encryption machine, that is, the data encryption and decryption method may be executed by the encryption machine. FIG. 2 is a flowchart of a data encryption and decryption method provided by an embodiment of the first aspect of the present application. As shown in FIG. 2, the data encryption and decryption method may include steps S201 to S204.

In step S201, in response to being called by an encryption and decryption execution platform based on a key mapping relationship, and receiving an encryption and decryption request sent by the encryption and decryption execution platform.

The encryption and decryption execution platform may determine the encryption machine where a master key required for encryption or decryption of data to be processed is located based on the key mapping relationship, and thus call the encryption machine. In this embodiment of the present application, the master key required for encryption or decryption of the data to be processed is a first target master key, and the encryption machine has the first target master key.

The key mapping relationship is maintained by a key management platform, and includes a mapping relationship of a master key unique identifier, an encryption machine cluster identifier and a master key physical index. The encryption and decryption execution platform may determine the master key physical index of the master key required for the current encryption or decryption based on the key mapping relationship, thereby determining the encryption machine to be called. In some examples, the encryption machine is called by the encryption and decryption execution platform based on an obtained target master key unique identifier, a target encryption machine cluster identifier and the key mapping relationship. In the key mapping relationship, the target master key physical index corresponds to the target master key unique identifier and the target encryption machine cluster identifier. The target master key physical index is a master key physical index of the first target master key. For example, the key mapping relationship is as shown in Table 1 below:

**Table 1**

| **Master Key Unique Identifier** | **Encryption Machine Cluster Identifier** | **Master Physical Index** | **Key Master Key** |
|---|---|---|---|
| gIndex1 | HsmClusterId1 | HsmIndex1 | MK1 |
| gIndex1 | HsmClusterId2 | HsmIndex2 | MK1 |

Table 1 shows a key mapping relationship including a mapping relationship of a master key unique identifier, an encryption machine cluster identifier and a master key physical index. The same master key may exist in different encryption machine clusters. The master key unique identifier of the master key MK1 is gIndex1. The master key MK1 exists in two encryption machine clusters, and the master key physical index of the master key MK1 is also different in the two encryption machine clusters. The encryption machine cluster identifiers of the two encryption machine clusters are hsmClusterId1 and hsmClusterId2, respectively. Correspondingly, the master key physical index corresponding to the encryption machine cluster identifier hsmClusterId1 is hsmIndex1, and the master key physical index corresponding to the encryption machine cluster identifier hsmClusterId2 is hsmIndex2. If the obtained target master key unique identifier is gIndex1 and the target encryption machine cluster identifier is hsmClusterId1, then the target master key physical index is hsmIndex1, and the corresponding master key MK1 may be obtained according to the target master key physical index hsmIndex 1.

In some examples, the key mapping relationship is synchronized in advance by the key management platform to the encryption and decryption execution platform; the encryption and decryption execution platform may determine the target master key physical index in the pre-synchronized key mapping relationship according to the target master key unique identifier and the target encryption machine cluster identifier, and then determine the encryption machine to be called according to the target master key physical index.

In some examples, the target master key physical index is obtained by the encryption and decryption execution platform querying the key mapping relationship from the key management platform. The encryption and decryption execution platform may provide the obtained target master key unique identifier and target encryption machine cluster identifier to the key management platform. The key management platform determines the target master key physical index in the key mapping relationship according to the target master key unique identifier and the target encryption machine cluster identifier, and feeds back the target master key physical index to the encryption and decryption execution platform, so that the encryption and decryption execution platform determines the encryption machine to be called according to the target master key physical index.

The encryption and decryption request may include data to be processed and target working key indication data. The data to be processed including data to be encrypted or data to be decrypted. The encryption and decryption request may be specifically implemented as an encryption request or a decryption request. On the condition that the data to be processed includes the data to be encrypted, the encryption and decryption request is implemented as an encryption request, and the encryption machine subsequently performs encryption processing on the data to be encrypted; on the condition that the data to be processed includes the data to be decrypted, the encryption and decryption request is implemented as a decryption request, and the encryption machine subsequently performs decryption processing on the data to be decrypted. The working key indication data may indicate the working key ciphertext, that is, the corresponding working key ciphertext may be obtained according to the working key indication data, and different working key ciphertexts correspond to different working key indication data. The target working key indication data is the working key indication data in the encryption and decryption request, and the target working key indication data is used to indicate a target working key ciphertext. In some examples, the working key indication data may include a working key ciphertext index or a working key ciphertext; correspondingly, the target working key indication data includes a target working key ciphertext index or the target working key ciphertext. The target working key ciphertext index points to the target working key ciphertext, and the target working key ciphertext can be obtained according to the target working key ciphertext index.

In step S202, decrypting the target working key ciphertext using the first target master key, to obtain a target working key.

The working key ciphertext is obtained by encrypting the working key with the master key. Correspondingly, the target working key ciphertext is obtained by encrypting the target working key according to the first target master key. The encryption machine may acquire the target working key ciphertext according to the target working key indication data, and decrypt the target working key ciphertext using the first target master key to obtain the target working key. The encryption machine may acquire the working key ciphertext according to the working key indication data. The working key ciphertext does not need to be stored in the encryption machine. The amount of working keys, or in other words, the amount of working key ciphertexts, is not limited by the capacity of the encryption machine, making the management of working keys, or working key ciphertexts, more flexible.

In step S203, encrypting or decrypting the data to be processed by using the target working key, to obtain result data.

The result data may include data obtained by encrypting or decrypting the data to be processed using the target working key, and may also include data related to the encryption process or data related to the decryption process. On the condition that the data to be processed includes the data to be encrypted, the data to be processed is encrypted by using the target working key, and the obtained result data may include the ciphertext after encryption of the data to be encrypted and the target working key indication data. On the condition that the data to be processed includes the data to be decrypted, the data to be decrypted is decrypted by using the target working key, and the obtained result data may include the plaintext after decryption of the data to be decrypted; in some cases, the obtained result data may also include the target working key indication data.

In step S204, feeding back the result data to the encryption and decryption execution platform. After receiving the result data, the encryption and decryption execution platform may store the result data, or transmit the result data to other apparatuses, devices, or platforms, etc., for storage by the other apparatuses, devices, or platforms, etc. For example, when the encryption and decryption execution platform belongs to the user side, the encryption and decryption execution platform may directly store the result data; when the encryption and decryption execution platform is independent of the user side, the encryption and decryption execution platform may send the result data to the user side for storage in the user side's apparatus, device, or platform, etc. The encryption and decryption execution platform, or other apparatuses, devices, or platforms, etc., may be configured with an application database to store the result data in the format required by the application database. The encryption and decryption execution platform may also transmit the result data to downstream systems, etc., so that the downstream systems also have the capability to decrypt data and use data.

In this embodiment of the present application, the encryption machine having the first target master key may be called by the encryption and decryption execution platform based on the key mapping relationship maintained by the key management platform, where the encryption machine uses the first target master key indicated by the target master key physical index in the encryption and decryption request sent by the encryption and decryption execution platform to decrypt the target working key ciphertext indicated by the target working key indication data in the encryption and decryption request, to obtain the target working key, and uses the target working key to encrypt or decrypt the data to be processed in the encryption and decryption request, to obtain and feed back result data to the encryption and decryption execution platform. In this encryption and decryption process, the plaintext of the working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext, which may prevent the working key from being exposed in plaintext, thereby avoiding working key leakage and improving data security. Moreover, the circulation of the working key indication data between different platforms and devices enables all platforms and devices that acquire the working key indication data to have the capability to decrypt data on the basis of data security, improving the applicability of the data encryption and decryption method.

In some embodiments, information carrying the encrypted ciphertext may be structured, so that the information carrying the encrypted ciphertext may be generated and used in a unified format. Here, the encrypted ciphertext may include the ciphertext after encryption of the data to be encrypted or the data to be decrypted. The ciphertext after encryption of the data to be encrypted is the ciphertext obtained by encrypting the data to be encrypted during the encryption process; the data to be decrypted is the ciphertext acquired during the decryption process that needs to be decrypted.

On the condition that the data to be processed includes the data to be encrypted, that is, during the encryption process, the result data includes structured information. On the condition that the data to be processed includes the data to be decrypted, that is, during the decryption process, the data to be processed includes the structured information. The structured information is information with a fixed structure and format. The structured information may include a first field. The first field may include the target working key indication data, encryption auxiliary data and an encrypted ciphertext. The target working key indication data may indicate the target working key ciphertext. In the key management platform, the corresponding target working key ciphertext and the corresponding master key physical index may be queried according to the target working key indication data. The target working key indication data in the first field may be filled in during the encryption process, specifically, may be filled into the first field by the encrypting party or another party. For the specific content of the encrypted ciphertext, please refer to the relevant content in the above embodiments, which will not be repeated here. The encryption auxiliary data includes auxiliary data required in the encryption process. In some examples, the encryption auxiliary data includes one or more of the following: encryption algorithm data, random vector data, encryption mode data, or encryption/decryption encoding data. The encryption algorithm data may represent an encryption algorithm used for encrypting the encrypted ciphertext, and may use an enumeration type data type, while the meaning of a value of the encryption algorithm data may be customized. The encryption algorithm data may be filled in during encryption, specifically, may be filled into the first field by the encrypting party or another party. The random vector data may represent a random initial vector required for encrypting the encrypted ciphertext. The random initial vector may be randomly generated by the encryption machine or the encrypting party and filled into the first field. The encryption mode data may represent an encryption mode for encrypting the encrypted ciphertext. The encryption mode may include, but is not limited to, Electronic Codebook (ECB) mode, Cipher Block Chaining (CBC) mode, etc. The encryption mode data may use an enumeration type data type, and the meaning of the value of the encryption mode data may be customized. The encryption mode data may be filled in during encryption, specifically, may be filled into the first field by the encrypting party or another party.

In some cases, the encryption algorithm data and the encryption mode data may be combined into encryption algorithm and mode data. The encryption algorithm and mode data may represent the encryption algorithm and encryption mode. The encryption/decryption encoding data is used to indicate a conversion method between bytecode and characters during the encryption and decryption processes, and may use an enumeration type data type. The meaning of the value of the encryption/decryption encoding data may be customized. The encryption/decryption encoding data may be filled in during encryption, specifically, may be filled into the first field by the encrypting party or another party. The encrypted ciphertext in the structured information may be obtained by encrypting the plaintext corresponding to the encrypted ciphertext according to the encryption auxiliary data in the first field.

In some examples, the first field further includes check data and/or a data reserved bit. The check data includes a check value and check algorithm data. The check value is a check value for the integrity of the plaintext corresponding to the encrypted ciphertext. The check value may be processed by the encryption machine and filled into the first field. The check value may include a MAC check value. The check algorithm data represents the check algorithm used to calculate the check value. The check algorithm represented by the check algorithm data may include, but is not limited to, the type of check algorithm and the specific algorithm. The check algorithm data may use an enumeration type data type. The meaning of the value of the check algorithm data may be customized. The check algorithm data may be filled in before calculating the check value, specifically, may be filled into the first field by the encrypting party or another party. The check algorithm represented by the check algorithm data may include a MAC check algorithm, and the type of MAC check algorithm is not limited herein.

In some examples, the structured information further includes a second field including hash data, the hash data including a hash value of a plaintext corresponding to the encrypted ciphertext. The hash data may be obtained by processing the plaintext corresponding to the encrypted ciphertext through a predetermined algorithm, and corresponds one-to-one with the plaintext corresponding to the encrypted ciphertext, that is, different plaintexts correspond to different hash data. The hash data may also be regarded as digest data, and a suitable algorithm may be selected here according to the scene, demand, experience, etc. For example, the algorithm required to obtain the hash data may include, but is not limited to, the SM3 algorithm. For example, if the data to be encrypted includes a sub-machine number, the SM3 algorithm may be employed to process the sub-machine number to obtain the SM3 hash data of the sub-machine number. The algorithm required to obtain the hash data is not limited herein. It should be noted that the hash data may be used for ciphertext retrieval, that is, the hash data may be used for retrieving the structured information including the encrypted ciphertext. For example, a device storing the structured information may receive a ciphertext retrieval message. The ciphertext retrieval message may include target hash data including hash data obtained by processing a plaintext to be retrieved through a predetermined algorithm; the device storing the structured information queries the stored structured information for hash data consistent with the target hash data, determines the structured information where the hash data consistent with the target hash data is located as the structured information to be found, and determines the encrypted ciphertext in the structured information as the encrypted ciphertext to be found. This solves the problem that ciphertext cannot be retrieved, and enables the required encrypted ciphertext to be retrieved while ensuring data security, thereby obtaining the corresponding plaintext according to the encrypted ciphertext. The data reserved bit is a reserved blank data space, and the data reserved bit may be used to add new data to the structured information when needed.

The content in the structured information may be increased or decreased according to application scenarios, actual needs, etc., and is not limited herein. In some examples, on the condition that the structured information includes target working key indication data, encryption algorithm data, random vector data, encryption mode data, encryption/decryption encoding data, a check value, check algorithm data, a data reserved bit, an encrypted ciphertext and hash data, the target working key indication data, encryption algorithm data, random vector data, encryption mode data, encryption/decryption encoding data, check value, check algorithm data, data reserved bit, and encrypted ciphertext may be one field, i.e., the first field, and the hash data may be another field, i.e., the second field.

The structured information may be implemented as, but not limited to, information formats with a fixed structure such as a protocol message, a key-value pair or JSON structure data.

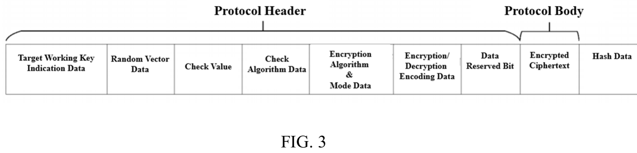

On the condition that the structured information is implemented as a protocol message, the protocol message may include a protocol header and a protocol body, the protocol header including the target working key indication data and the encryption auxiliary data, and the protocol body including the encrypted ciphertext. The protocol header may also include check data and/or a data reserved bit. For example, FIG. 3 is a schematic diagram of an example of structured information implemented as a protocol message provided by an embodiment of the present application. As shown in FIG. 3, the protocol message may include a protocol header, a protocol body, and hash data. The protocol header and the protocol body may be one field, i.e., the first field, and the hash data may be another field, i.e., the second field. The protocol header may include fields such as target working key indication data, random vector data, check value, check algorithm data, encryption algorithm and mode data, encryption/decryption encoding data, data reserved bit, etc. The protocol body includes fields such as encrypted ciphertext, etc. The lengths of the above fields may be set according to scenarios, needs, experience, etc., and are not limited herein. For example, the length of the target working key indication data may be 16 bytes, the length of the random vector data may be 32 bytes, the length of the check value may be 32 bytes, the length of the check algorithm data may be 1 byte, the length of the encryption algorithm and mode data may be 1 byte, the length of the encryption/decryption encoding data may be 1 byte, the length of the data reserved bit may be 17 bytes, and the length of the encrypted ciphertext may be greater than or equal to 2 times the length of the plaintext. On the condition that the structured information is implemented as a key-value pair, the target working key indication data, random vector data, check value, check algorithm data, encryption algorithm and mode data, encryption/decryption encoding data, data reserved bit, encrypted ciphertext, hash data, etc., may all serve as keys in the key-value pair, and the values of the target working key indication data, random vector data, check value, check algorithm data, encryption algorithm and mode data, encryption/decryption encoding data, data reserved bit, encrypted ciphertext, hash data, etc., may serve as values in the key-value pair.

On the condition that the structured information is implemented as JSON structure data, the structured information may be implemented in the form of {'name': 'value pair'}. The target working key indication data, random vector data, check value, check algorithm data, encryption algorithm and mode data, encryption/decryption encoding data, data reserved bit, encrypted ciphertext, hash data, etc., may serve as names in the JSON structure data; and the values of the target working key indication data, random vector data, check value, check algorithm data, encryption algorithm and mode data, encryption/decryption encoding data, data reserved bit, encrypted ciphertext, hash data, etc., may serve as value pairs in the JSON structure data.

An encrypting party may generate and save the structured information according to the above-mentioned target working key indication data, random vector data, check value, check algorithm data, encryption algorithm and mode data, encryption/decryption encoding data, data reserved bit, encrypted ciphertext, hash data, etc. A decrypting party may implement same-system decryption and cross-system decryption of the encrypted ciphertext according to the structured information and the key mapping relationship maintained by the key management platform.

The structured information in the above embodiments may be used for storage and/or transmission among two or more devices belonging to an identical system or different systems. If the two or more devices transmitting the structured information belong to the same system, the transmission of the encrypted ciphertext within the same system is realized; if the two or more devices transmitting the structured information belong to different systems, the cross-system transmission of the encrypted ciphertext may be realized. Since the structure of the structured information is preset and universal in different systems, it solves the inconvenience of cross-system transmission and use of encrypted data, and simplifies the processing flow of encrypted data in cross-system transmission. The structured information that meets storage and transmission requirements may be obtained without repeated encryption and decryption in different systems.

The application and popularization of structured information in various systems require a certain process, and each system needs to be transformed to make the structured information applicable to each system. In two systems transmitting data, if both are systems applicable to structured information, the two systems may transmit data through the structured information in the above embodiments; if one of them is a system applicable to structured information, and the other is a system whose transformation has not yet been completed, i.e., a system not applicable to structured information, then the two systems transmit plaintext data until both are systems applicable to structured information, at which point they no longer transmit plaintext data, but transmit the structured information in the above embodiments.

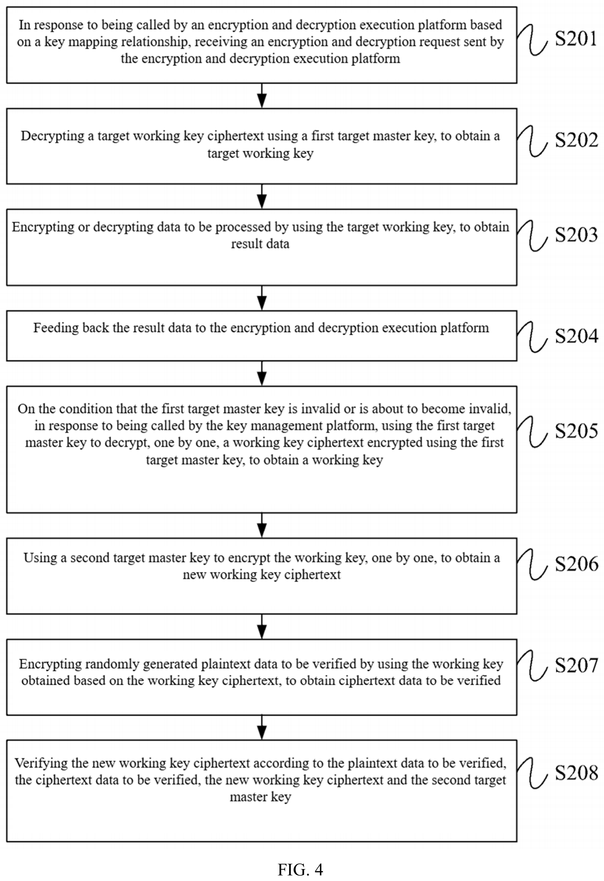

In some embodiments, the master key needs to be replaced. Since the working key ciphertext is obtained by encrypting the working key using the master key, on the condition that the master key is replaced, the replaced master key needs to be employed to re-encrypt the working key to obtain a new working key ciphertext, that is, to implement the re-encryption of the working key. FIG. 4 is a flowchart of a data encryption and decryption method provided by another embodiment of the first aspect of the present application. The difference between FIG. 4 and FIG. 2 is that the data encryption and decryption method shown in FIG. 4 further includes steps S205 to S208.

In step S205, on the condition that the first target master key is invalid or is about to become invalid, in response to being called by the key management platform, and using the first target master key to decrypt, one by one, a working key ciphertext encrypted using the first target master key, to obtain a working key.

Invalidation of the first target master key may be invalidation due to the expiration of the validity period, or invalidation in response to a corresponding request, which is not limited herein. The invalidation of the master key may be monitored and determined by the key management platform or the encryption and decryption execution platform through an online interface. The working key ciphertext before re-encryption is still the working key encrypted using the first target master key. The encryption machine is called by the key management platform and uses the first target master key to decrypt each working key ciphertext, to obtain the working key corresponding to each working key ciphertext.

In step S206, using a second target master key to encrypt the working key, one by one, to obtain a new working key ciphertext.

The second target master key is a master key used to replace the first target master key, and may be obtained in response to a user's entry input. The key management platform may configure a corresponding master key unique identifier for the second target master key, and add a mapping relationship including the master key unique identifier of the second target master key, the encryption machine cluster identifier, and the master key index to the key mapping relationship. The working key is not deleted during the re-encryption process to ensure security.

In some examples, before encrypting the working key using the second target master key, the key management platform may first add a new working key ciphertext record and the master key unique identifier of the second target master key, but at this time, the content of the working key ciphertext in the new working key ciphertext record is empty; after encrypting the working key using the second target master key, the new working key ciphertext record is updated with the obtained new working key ciphertext, that is, the new working key ciphertext is written into the content of the working key ciphertext in the new working key ciphertext record.

In step S207, encrypting randomly generated plaintext data to be verified by using the working key obtained based on the working key ciphertext, to obtain ciphertext data to be verified.

Since master key replacement is a low-frequency and extremely rigorous process, after obtaining the new working key ciphertext encrypted with the second target master key, the new working key ciphertext needs to be verified. In this embodiment of the present application, the randomly generated plaintext data to be verified may be employed, combined with the working key obtained from the original working key ciphertext and the second target master key, to implement the verification of the new working key ciphertext.

In step S208, verifying the new working key ciphertext according to the plaintext data to be verified, the ciphertext data to be verified, the new working key ciphertext and the second target master key.

The ciphertext data to be verified is the ciphertext obtained by encrypting the plaintext data to be verified using the working key obtained based on the working key ciphertext before re-encryption. Before and after re-encryption, the working key does not change; what changes is the working key ciphertext, that is, the working key ciphertext before re-encryption is different from the working key ciphertext after re-encryption. If the re-encryption is successful, for the same data, the ciphertext obtained by encrypting with the working key corresponding to the working key ciphertext before re-encryption is consistent with the ciphertext obtained by encrypting with the working key corresponding to the working key ciphertext after re-encryption (i.e., the new working key ciphertext); the plaintext obtained by decrypting with the working key corresponding to the working key ciphertext before re-encryption is consistent with the plaintext obtained by decrypting with the working key corresponding to the new working key ciphertext. This point may be used to verify the new working key ciphertext. According to the plaintext data to be verified, the new working key ciphertext and the second target master key, the ciphertext obtained by encrypting with the working key corresponding to the new working key ciphertext may be acquired; according to the ciphertext data to be verified, the new working key ciphertext, and the second target master key, the plaintext obtained by decrypting with the working key corresponding to the new working key ciphertext may be acquired. Through the comparison of the ciphertexts obtained before and after re-encryption for the same data, and/or the comparison of the plaintexts obtained before and after re-encryption for the same data, the verification of the new working key ciphertext may be implemented.

Specifically, the encryption machine may: decrypt the new working key ciphertext by using the second target master key, to obtain the working key; decrypt the ciphertext data to be verified by using the decrypted working key, to obtain first data, and compare the first data with the plaintext data to be verified; and/or encrypt the plaintext data to be verified by using the decrypted working key, to obtain second data, and compare the second data with the ciphertext data to be verified; and on the condition that the first data is consistent with the plaintext data to be verified, and/or, the second data is consistent with the ciphertext data to be verified, determine that the new working key ciphertext is verified successfully.

The first data is the plaintext obtained by using the working key after re-encryption. If the first data is consistent with the plaintext data to be verified, it indicates that the working key ciphertext after re-encryption may be used normally. The second data is the ciphertext obtained by using the working key after re-encryption, and the ciphertext data to be verified is the ciphertext obtained by the working key before re-encryption. If the second data is consistent with the ciphertext data to be verified, it indicates that the working key ciphertext after re-encryption may be used normally. In the comparison between the first data and the plaintext data to be verified and the comparison between the second data and the ciphertext data to be verified, one comparison may be selected, or both comparisons may be performed.

Correspondingly, on the condition that the first data is inconsistent with the plaintext data to be verified, or, the second data is inconsistent with the ciphertext data to be verified, it is determined that verification of the new working key ciphertext fails. The failure of the new working key ciphertext verification may be caused by re-encryption failure, or by problems with the plaintext data to be verified such as invisible special characters appearing in the randomly generated plaintext data to be verified, or by uncontrollable factors during the operation of the encryption machine, such as power failure during the re-encryption process of the encryption machine. The plaintext data to be verified may be verified, and corresponding operations are taken based on the verification result.

Specifically, the encryption machine may: on the condition that the verification of the new working key ciphertext fails, verify the plaintext data to be verified according to the plaintext data to be verified, the ciphertext data to be verified, the working key ciphertext and the first target master key; on the condition that the verification of the plaintext data to be verified fails, acquire new plaintext data to be verified that is randomly generated, and encrypt the new plaintext data to be verified by using the working key obtained based on the working key ciphertext, to obtain new ciphertext data to be verified; and verify the new working key ciphertext according to the new plaintext data to be verified, the new ciphertext data to be verified, the new working key ciphertext and the second target master key.

Among them, the step of verifying the plaintext data to be verified according to the plaintext data to be verified, the ciphertext data to be verified, the working key ciphertext and the first target master key is similar to the step of verifying the new working key ciphertext according to the plaintext data to be verified, the ciphertext data to be verified, the new working key ciphertext and the second target master key in the above embodiments. The encryption machine may: decrypt the working key ciphertext, i.e., the working key ciphertext before re-encryption, using the first target master key to obtain the working key; use the decrypted working key to decrypt the ciphertext data to be verified to obtain third data, and compare the third data with the plaintext data to be verified; and/or use the decrypted working key to encrypt the plaintext data to be verified to obtain fourth data, and compare the fourth data with the ciphertext data to be verified; on the condition that the third data is consistent with the plaintext data to be verified, and/or, the fourth data is consistent with the ciphertext data to be verified, determine that the plaintext data to be verified is verified successfully; on the condition that the third data is inconsistent with the plaintext data to be verified, or, the fourth data is inconsistent with the ciphertext data to be verified, determine that the verification of the plaintext data to be verified fails. The third data is the plaintext obtained by decrypting with the working key before re-encryption, and the fourth data is the ciphertext obtained by encrypting with the working key before re-encryption. The third data being consistent with the plaintext data to be verified indicates that the randomly generated plaintext data to be verified has no problem, that is, the verification of the plaintext data to be verified is successful; the fourth data being consistent with the ciphertext data to be verified indicates that the randomly generated plaintext data to be verified has no problem, that is, the verification of the plaintext data to be verified is successful. In the comparison between the third data and the plaintext data to be verified and the comparison between the fourth data and the ciphertext data to be verified, one comparison may be selected, or both comparisons may be performed. If the plaintext data to be verified has no problem, then the above-mentioned failure of the new working key ciphertext verification may be caused by factors other than the plaintext data to be verified. The plaintext data to be verified may be used to re-verify the new working key ciphertext. For specific steps, please refer to the relevant descriptions in the above embodiments, which will not be repeated here. When the third data is inconsistent with the plaintext data to be verified, or, the fourth data is inconsistent with the ciphertext data to be verified, it is indicated that the randomly generated plaintext data to be verified may have problems. New plaintext data to be verified may be randomly generated, and new ciphertext data to be verified corresponding to the new plaintext data to be verified is obtained accordingly. The new ciphertext data to be verified is obtained by encrypting with the working key corresponding to the working key ciphertext before re-encryption. The step of verifying the new working key ciphertext according to the new plaintext data to be verified, the new ciphertext data to be verified, the new working key ciphertext and the second target master key is similar to the step of verifying the new working key ciphertext according to the plaintext data to be verified, the ciphertext data to be verified, the new working key ciphertext and the second target master key in the above embodiments. Refer to the relevant descriptions in the above embodiments, which will not be repeated here.

In the above embodiments, the re-encryption of the working key is performed one by one, and records need to be made before and after the re-encryption to ensure that the new working key ciphertext is verified one by one, avoiding omission of the re-encryption of the working key and the verification of the new working key ciphertext.

In some embodiments, the working key has a validity period. When the validity period is reached, the working key needs to be replaced, and the data to be processed protected by the working key needs to be re-encrypted. The lifecycle of a working key may sequentially include a working key validity period, a working key replacement period and a working key expiration period. For example, 0 to 2.5 years is the working key validity period, 2.5 to 3 years is the working key replacement period, and after 3 years is the working key expiration period. On the condition that a current time point is within a working key validity period, the original working key is valid, and the encryption machine uses the original working key to encrypt the data to be encrypted and uses the original working key to decrypt the data to be decrypted. On the condition that a current time point is within a working key replacement period, the original working key is gradually replaced with a new working key. The encryption machine may decrypt the data to be decrypted by using an original working key, encrypt the data to be encrypted by using a new working key, and feed back the working key indication data indicating the working key ciphertext corresponding to the new working key to the encryption and decryption execution platform, realizing implicit re-encryption of the data to be processed. On the condition that the current time point is after the working key replacement period, the new working key has completely replaced the original working key. The encryption machine may decrypt the data to be decrypted by using the new working key, and encrypt the data to be encrypted by using the new working key. In some examples, on the condition that the current time point is within the working key expiration period, the encryption and decryption execution platform may, according to the actual demand for data activity, provide the data to be processed that was not re-encrypted during the working key replacement period to the encryption machine, and the encryption machine uses the new working key to encrypt or decrypt the data to be processed to complete the re-encryption of the data to be processed. For example, the encryption machine may use the new working key to encrypt or decrypt the data to be processed that was generated within a preset time period from the current time point and was not re-encrypted during the working key replacement period, to complete the re-encryption; the encryption machine does not re-encrypt the data to be processed whose generation time exceeds the preset time period from the current time point.

Embodiments of the present application may realize non-perceptive re-encryption of working keys and data to be processed. When the amount of working keys and the amount of data to be processed are large, re-encryption may be performed centrally one by one to improve the efficiency of re-encryption.

In some embodiments, a root encryption machine may also be set up. The root encryption machine, as intended to maintain all master keys, may enter the master key according to a user's input. On the condition that the encryption machine in the above embodiments is a root encryption machine, the encryption machine may store a master key, determine the master key physical index of the master key in the root encryption machine as the master key unique identifier of the master key, and synchronize the master key unique identifier to the key management platform.

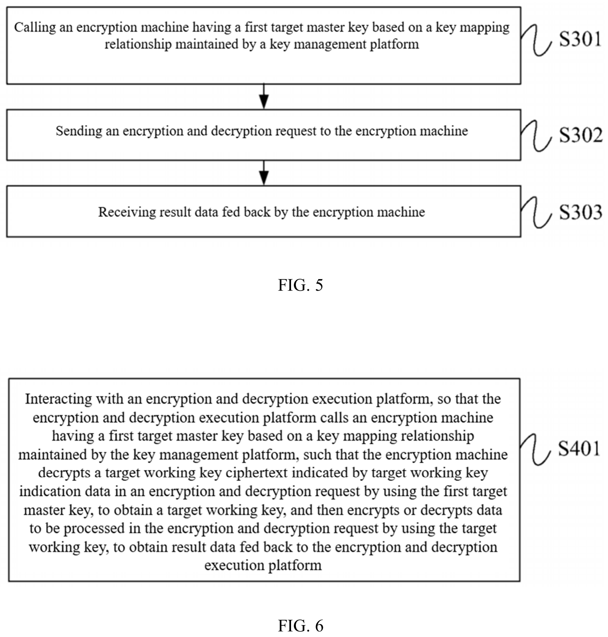

A second aspect of the present application provides a data encryption and decryption method, applied to an encryption and decryption execution platform, that is, the data encryption and decryption method may be executed by the encryption and decryption execution platform. FIG. 5 is a flowchart of a data encryption and decryption method provided by an embodiment of the second aspect of the present application. As shown in FIG. 5, the data encryption and decryption method may include steps S301 to S303.

In step S301, calling an encryption machine having a first target master key based on a key mapping relationship maintained by a key management platform.

The key mapping relationship may include a mapping relationship of a master key unique identifier, an encryption machine cluster identifier and a master key physical index.

Specifically, the encryption and decryption execution platform may determine the target master key physical index based on an obtained target master key unique identifier, a target encryption machine cluster identifier, and the key mapping relationship, and determine and call the encryption machine having the first target master key according to the target master key physical index. In some examples, the encryption and decryption execution platform may query, in the key mapping relationship synchronized in advance from the key management platform, for the master key physical index corresponding to the target master key unique identifier and the target encryption machine cluster identifier, and determine the master key physical index as the target master key physical index.

In other examples, the encryption and decryption execution platform may query the key management platform, based on the target master key unique identifier and the target encryption machine cluster identifier, for the master key physical index corresponding to the target master key unique identifier and the target encryption machine cluster identifier in the key mapping relationship, and determine the master key physical index as the target master key physical index.

In step S302, sending an encryption and decryption request to the encryption machine. The encryption and decryption request includes data to be processed and target working key indication data. The data to be processed includes data to be encrypted or data to be decrypted, and the target working key indication data is used to indicate a target working key ciphertext. The encryption and decryption request is used to cause the encryption machine to decrypt the target working key ciphertext using the first target master key to obtain a target working key, and to encrypt or decrypt the data to be processed using the target working key to obtain result data.

In some examples, the target working key indication data includes a target working key ciphertext index or the target working key ciphertext, the target working key ciphertext index pointing to the target working key ciphertext, and the target working key ciphertext being obtained by encrypting the target working key according to the first target master key.

In step S303, receiving the result data fed back by the encryption machine. In some examples, on the condition that the data to be processed includes the data to be encrypted, the result data includes ciphertext after encryption of the data to be encrypted and the target working key indication data. On the condition that the data to be processed includes the data to be decrypted, the result data includes plaintext after decryption of the data to be decrypted.

In some examples, on the condition that the data to be processed includes the data to be encrypted, the result data includes structured information; on the condition that the data to be processed includes the data to be decrypted, the data to be processed includes the structured information. The structured information includes a first field, the first field including the target working key indication data, encryption auxiliary data and an encrypted ciphertext including ciphertext after encryption of the data to be encrypted or the data to be decrypted.

In some examples, the encryption auxiliary data includes one or more of the following: encryption algorithm data, random vector data, encryption mode data, or encryption/decryption encoding data.

In some examples, the first field further includes check data and/or a data reserved bit. The check data includes a check value and check algorithm data. In some examples, the structured information further includes a second field including hash data, the hash data including a hash value of a plaintext corresponding to the encrypted ciphertext. In some examples, the structured information is implemented as a protocol message, a key-value pair or JSON structure data. The protocol message includes a protocol header and a protocol body, the protocol header including the target working key indication data and the encryption auxiliary data, and the protocol body including the encrypted ciphertext. In some examples, the structured information is used for storage or transmission among two or more devices, the two or more devices belonging to an identical system or different systems.

For the specific content of the above steps S301 to S303, refer to the relevant descriptions in the above embodiments, which will not be repeated here.

In this embodiment of the present application, the encryption and decryption execution platform calls an encryption machine having the first target master key based on the key mapping relationship maintained by the key management platform, and sends an encryption and decryption request to the encryption machine, the encryption and decryption request including the target master key physical index, the data to be processed, and the target working key indication data capable of indicating the target working key ciphertext. The encryption machine may decrypt the target working key ciphertext indicated by the target working key indication data by using the first target master key indicated by the target master key physical index, to obtain the target working key, and encrypt or decrypt the data to be processed by using the target working key, to obtain the result data; and the encryption and decryption execution platform receives the result data fed back by the encryption machine. In this encryption and decryption process, the plaintext of the working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext, which may prevent the working key from being exposed in plaintext, thereby avoiding working key leakage and improving data security. Moreover, the circulation of the working key indication data between different platforms and devices enables all platforms and devices that acquire the working key indication data to have the capability to decrypt data on the basis of data security, improving the applicability of the data encryption and decryption method.

In some embodiments, on the condition that a current time point is within a working key replacement period, the encryption and decryption execution platform may call the encryption machine to decrypt the data to be decrypted by using an original working key, and to encrypt the data to be encrypted by using a new working key. On the condition that the current time point is after the working key replacement period, the encryption and decryption execution platform may call the encryption machine to decrypt the data to be decrypted by using the new working key, and to encrypt the data to be encrypted by using the new working key.

For the specific content of the data encryption and decryption method executed by the encryption and decryption execution platform, please refer to the relevant content in the data encryption and decryption method executed by the encryption machine in the above embodiments, which will not be repeated here.

A third aspect of the present application provides a data encryption and decryption method, applied to a key management platform, that is, the data encryption and decryption method is executed by the key management platform. FIG. 6 is a flowchart of a data encryption and decryption method provided by an embodiment of the third aspect of the present application. As shown in FIG. 6, the data encryption and decryption method may include step S401.

In step S401, interacting with an encryption and decryption execution platform, so that the encryption and decryption execution platform calls an encryption machine having a first target master key based on a key mapping relationship maintained by the key management platform, such that the encryption machine decrypts a target working key ciphertext indicated by target working key indication data in an encryption and decryption request by using the first target master key, to obtain a target working key, and then encrypts or decrypts data to be processed in the encryption and decryption request by using the target working key, to obtain result data fed back to the encryption and decryption execution platform.

The key mapping relationship includes a mapping relationship of a master key unique identifier, an encryption machine cluster identifier and a master key physical index. The encryption and decryption request is sent by the encryption and decryption execution platform to the encryption machine. The data to be processed includes data to be encrypted or data to be decrypted. In some examples, the target working key indication data includes a target working key ciphertext index or the target working key ciphertext, the target working key ciphertext index pointing to the target working key ciphertext. The target working key ciphertext being obtained by encrypting the target working key according to the first target master key.

In some examples, the target master key physical index is the master key physical index of the first target master key; and in the key mapping relationship, the target master key physical index corresponds to a target master key unique identifier and a target encryption machine cluster identifier.

The above step of interacting with the encryption and decryption execution platform may be specifically implemented as: synchronizing the key mapping relationship to the encryption and decryption execution platform; or, querying, according to the target master key unique identifier and the target encryption machine cluster identifier sent by the encryption and decryption execution platform, for the target master key physical index in the key mapping relationship; and feeding back the target master key physical index to the encryption and decryption execution platform.

In some examples, on the condition that the data to be processed includes the data to be encrypted, the result data includes ciphertext after encryption of the data to be encrypted and the target working key indication data. On the condition that the data to be processed includes the data to be decrypted, the result data includes plaintext after decryption of the data to be decrypted.

In some examples, on the condition that the data to be processed includes the data to be encrypted, the result data includes structured information; on the condition that the data to be processed includes the data to be decrypted, the data to be processed includes structured information. The structured information includes a first field, the first field including the target working key indication data, encryption auxiliary data and an encrypted ciphertext including the ciphertext after encryption of the data to be encrypted or the data to be decrypted.

In some examples, the encryption auxiliary data includes one or more of the following: encryption algorithm data, random vector data, encryption mode data, or encryption/decryption encoding data.

In some examples, the first field further includes check data and/or a data reserved bit. The check data includes a check value and check algorithm data.

In some examples, the structured information further includes a second field including hash data, the hash data including a hash value of a plaintext corresponding to the encrypted ciphertext.

In some examples, the structured information is implemented as a protocol message, a key-value pair or JSON structure data. The protocol message includes a protocol header and a protocol body, the protocol header including the target working key indication data and the encryption auxiliary data, and the protocol body including the encrypted ciphertext.

In some examples, the structured information is used for storage or transmission among two or more devices, the two or more devices belonging to an identical system or different systems.

In this embodiment of the present application, the key management platform interacts with the encryption and decryption execution platform, so that the encryption and decryption execution platform calls an encryption machine having the first target master key based on the key mapping relationship maintained by the key management platform. The encryption and decryption execution platform sends an encryption and decryption request to the encryption machine, the encryption and decryption request including the target master key physical index, the data to be processed, and the target working key indication data capable of indicating the target working key ciphertext. The encryption machine may decrypt the target working key ciphertext indicated by the target working key indication data by using the first target master key indicated by the target master key physical index, to obtain the target working key, and encrypt or decrypt the data to be processed by using the target working key, to obtain the result data. The encryption and decryption execution platform receives the result data fed back by the encryption machine. In this encryption and decryption process, the plaintext of the working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext, which may prevent the working key from being exposed in plaintext, thereby avoiding working key leakage and improving data security. Moreover, the circulation of the working key indication data between different platforms and devices enables all platforms and devices that acquire the working key indication data to have the capability to decrypt data on the basis of data security, improving the applicability of the data encryption and decryption method.

In some embodiments, the key management platform may establish the key mapping relationship. The key management platform may: in response to a first input of a user, enter a master key unique identifier of a master key, the entered master key unique identifier being generated by the encryption machine; acquire a master key physical index of the master key indicated by the entered master key unique identifier and the encryption machine cluster identifier of an encryption machine cluster where the master key is located; and establish the key mapping relationship based on the master key unique identifier, the master key physical index of the master key indicated by the master key unique identifier, and the encryption machine cluster identifier of the encryption machine cluster where the master key is located.

When it is necessary to replace, add, or delete a master key, the key management platform may perform corresponding replacement, addition, or deletion operations on the information associated with the master key to be replaced, added, or deleted in the key mapping relationship.

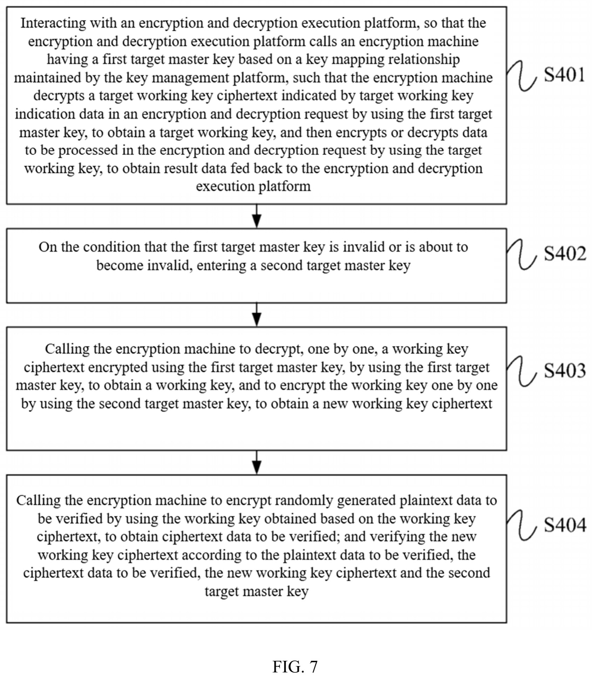

In some embodiments, the master key needs to be replaced. FIG. 7 is a flowchart of a data encryption and decryption method provided by another embodiment of the third aspect of the present application. The difference between FIG. 7 and FIG. 6 is that the data
encryption and decryption method shown in FIG. 7 further includes steps S402 to S404.

In step S402, on the condition that the first target master key is invalid or is about to become invalid, entering a second target master key.

The second target master key is generated by the encryption machine. That is, on the condition that the first target master key is invalid or is about to become invalid, the encryption machine may generate the second target master key.

In step S403, calling the encryption machine to decrypt, one by one, a working key ciphertext encrypted using the first target master key, by using the first target master key, to obtain a working key, and to encrypt the working key one by one by using the second target master key, to obtain a new working key ciphertext.

In step S404, calling the encryption machine to encrypt randomly generated plaintext data to be verified by using the working key obtained based on the working key ciphertext, to obtain ciphertext data to be verified; and verifying the new working key ciphertext according to the plaintext data to be verified, the ciphertext data to be verified, the new working key ciphertext and the second target master key.

For the specific content of the above steps S402 to S404, please refer to the relevant descriptions in the above embodiments, which will not be repeated here.

In some embodiments, the encryption machine includes a root encryption machine, the root encryption machine storing a master key; correspondingly, the key management platform may receive the master key physical index of the master key sent by the root encryption machine, and determine the master key physical index of the master key as the master key unique identifier of the master key. For the specific content, refer to the relevant descriptions in the above embodiments, which will not be repeated here.

For ease of understanding, the data encryption and decryption process is described below using two examples. The data encryption and decryption process involves the key management platform, an encrypting party, the encryption and decryption execution platform, the encryption machine and a decrypting party. The encrypting party may be regarded as a user side that has an encryption demand for data to be encrypted, and the decrypting party may be regarded as a user side that has a decryption demand for data to be decrypted. The encryption and decryption execution platform interacting with the encrypting party and the encryption and decryption execution platform interacting with the decrypting party may be the same or different, and the encryption machine called by the encryption and decryption execution platform during the encryption process and the decryption process may be the same or different. In this example, for convenience of description, the description is made on the assumption that the encryption and decryption execution platform interacting with the encrypting party and the encryption and decryption execution platform interacting with the decrypting party are the same, and the encryption machine called by the encryption and decryption execution platform during the encryption process and the decryption process is the same.

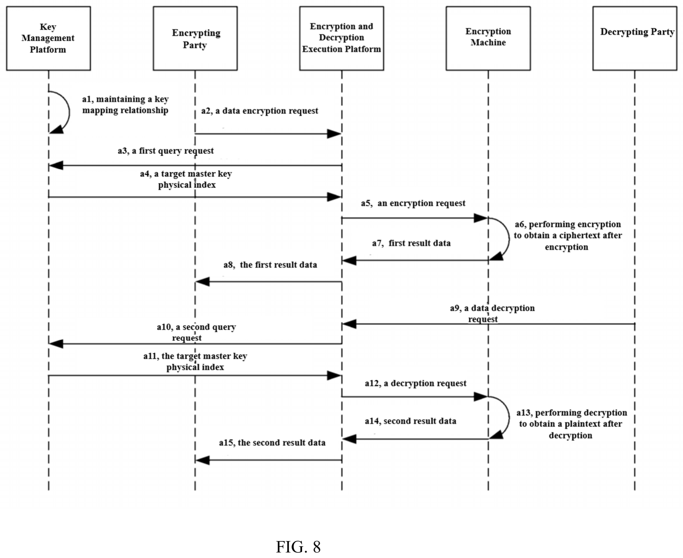

FIG. 8 is a schematic diagram of an example of a data encryption and decryption process provided by an embodiment of the present application. As shown in FIG. 8, the data encryption process may include steps a1 to a15.

In step a1, the key management platform maintains the key mapping relationship.

In step a2, the encrypting party sends a data encryption request to the encryption and decryption execution platform, the data encryption request including the data to be encrypted, the target working key ciphertext, the target master key unique identifier, and the target encryption machine cluster identifier.

In step a3, the encryption and decryption execution platform sends a first query request to the key management platform, the first query request including the target master key unique identifier and the target encryption machine cluster identifier.

In step a4, the key management platform determines the target master key physical index in the key mapping relationship according to the target master key unique identifier and the target encryption machine cluster identifier, and feeds back the target master key physical index to the encryption and decryption execution platform.

In step a5, the encryption and decryption execution platform calls the corresponding encryption machine according to the target master key physical index, and sends an encryption request to the encryption machine, the encryption request including the data to be encrypted and the target working key ciphertext.

In step a6, the encryption machine decrypts the target working key ciphertext using the master key indicated by the target master key physical index to obtain the target working key, and then encrypts the data to be encrypted using the target working key to obtain the ciphertext after encryption.

In step a7, the encryption machine generates first result data according to the ciphertext after encryption, the target working key ciphertext, and the target master key unique identifier, and feeds back the first result data to the encryption and decryption execution platform.

In step a8, the encryption and decryption execution platform feeds back the first result data to the encrypting party.

In step a9, the decrypting party sends a data decryption request to the encryption and decryption execution platform, the data decryption request including the data to be decrypted, the target working key ciphertext, the target master key unique identifier, and the target encryption machine cluster identifier.

In step a10, the encryption and decryption execution platform sends a second query request to the key management platform, the second query request including the target master key unique identifier and the target encryption machine cluster identifier.

In step a11, the key management platform determines the target master key physical index in the key mapping relationship according to the target master key unique identifier and the target encryption machine cluster identifier, and feeds back the target master key physical index to the encryption and decryption execution platform.

In step a12, the encryption and decryption execution platform calls the corresponding encryption machine according to the target master key physical index, and sends a decryption request to the encryption machine, the decryption request including the data to be decrypted and the target working key ciphertext.

In step a13, the encryption machine decrypts the target working key ciphertext using the master key indicated by the target master key physical index to obtain the target working key, and then decrypts the data to be decrypted using the target working key to obtain the plaintext after decryption.

In step a14, the encryption machine generates second result data according to the plaintext after decryption, the target working key ciphertext, and the target master key unique identifier, and feeds back the second result data to the encryption and decryption execution platform.

In step a15, the encryption and decryption execution platform feeds back the second result data to the decrypting party.

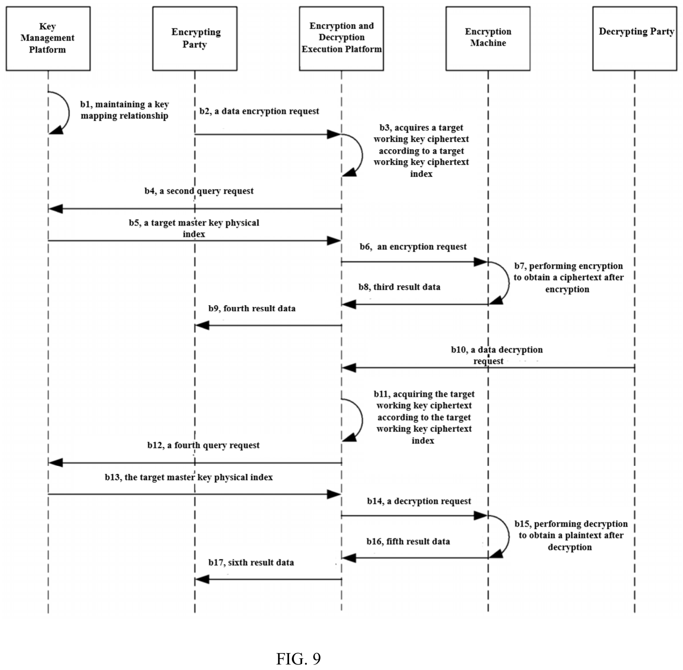

FIG. 9 is a schematic diagram of another example of a data encryption and decryption process provided by an embodiment of the present application. As shown in FIG. 9, the data encryption process may include steps b1 to b17.

In step b1, the key management platform maintains the key mapping relationship.

In step b2, the encrypting party sends a data encryption request to the encryption and decryption execution platform, the data encryption request including the data to be encrypted, the target working key ciphertext index, the target master key unique identifier, and the target encryption machine cluster identifier.

In step b3, the encryption and decryption execution platform acquires the target working key ciphertext according to the target working key ciphertext index.

In step b4, the encryption and decryption execution platform sends a third query request to the key management platform, the third query request including the target master key unique identifier and the target encryption machine cluster identifier.

In step b5, the key management platform determines the target master key physical index in the key mapping relationship according to the target master key unique identifier and the target encryption machine cluster identifier, and feeds back the target master key physical index to the encryption and decryption execution platform.

In step b6, the encryption and decryption execution platform calls the corresponding encryption machine according to the target master key physical index, and sends an encryption request to the encryption machine, the encryption request including the data to be encrypted and the target working key ciphertext.

In step b7, the encryption machine decrypts the target working key ciphertext using the master key indicated by the target master key physical index to obtain the target working key, and then encrypts the data to be encrypted using the target working key to obtain the ciphertext after encryption.

In step b8, the encryption machine generates third result data according to the ciphertext after encryption, and feeds back the third result data to the encryption and decryption execution platform.

In step b9, the encryption and decryption execution platform feeds back fourth result data to the encrypting party, the fourth result data including the ciphertext after encryption and the target working key ciphertext index.

In step b10, the decrypting party sends a data decryption request to the encryption and decryption execution platform, the data decryption request including the data to be decrypted, the target working key ciphertext index, the target master key unique identifier, and the target encryption machine cluster identifier.

In step b11, the encryption and decryption execution platform acquires the target working key ciphertext according to the target working key ciphertext index.

In step b12, the encryption and decryption execution platform sends a fourth query request to the key management platform, the fourth query request including the target master key unique identifier and the target encryption machine cluster identifier.

In step b13, the key management platform determines the target master key physical index in the key mapping relationship according to the target master key unique identifier and the target encryption machine cluster identifier, and feeds back the target master key physical index to the encryption and decryption execution platform.

In step b14, the encryption and decryption execution platform calls the corresponding encryption machine according to the target master key physical index, and sends a decryption request to the encryption machine, the decryption request including the data to be decrypted and the target working key ciphertext.

In step b15, the encryption machine decrypts the target working key ciphertext using the master key indicated by the target master key physical index to obtain the target working key, and then decrypts the data to be decrypted using the target working key to obtain the plaintext after decryption.

In step b16, the encryption machine generates fifth result data according to the plaintext after decryption, and feeds back the fifth result data to the encryption and decryption execution platform.

In step b17, the encryption and decryption execution platform feeds back sixth result data to the decrypting party, the sixth result data including the plaintext after decryption and the target working key ciphertext index.

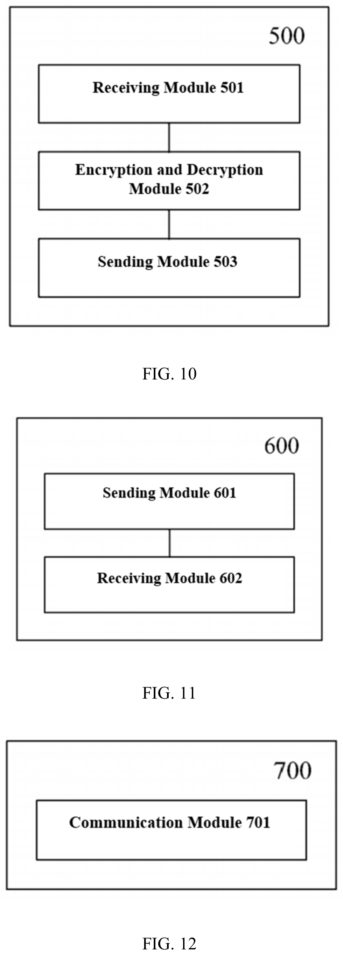

A fourth aspect of the present application provides an encryption machine, the encryption machine having a first target master key. FIG. 10 is a schematic structural diagram of an encryption machine provided by an embodiment of the fourth aspect of the present application. As shown in FIG. 10, the encryption machine 500 may include a receiving module 501, an encryption and decryption module 502 and a sending module 503.

The receiving module 501 may be configured to be called by an encryption and decryption execution platform based on a key mapping relationship, and receive an encryption and decryption request sent by the encryption and decryption execution platform.

The key mapping relationship is maintained by a key management platform, and includes a mapping relationship of a master key unique identifier, an encryption machine cluster identifier and a master key physical index. The encryption and decryption request includes a target master key physical index, data to be processed and target working key indication data. The target master key physical index is the master key physical index of the first target master key, the data to be processed includes data to be encrypted or data to be decrypted, and the target working key indication data is used to indicate a target working key ciphertext.

In some examples, the target working key indication data includes a target working key ciphertext index or the target working key ciphertext, the target working key ciphertext index pointing to the target working key ciphertext, and the target working key ciphertext being obtained by encrypting the target working key according to the first target master key.

In some examples, the receiving module 501 may be specifically configured to: be called by the encryption and decryption execution platform based on an obtained target master key unique identifier, a target encryption machine cluster identifier, and the key mapping relationship; and receive the encryption and decryption request sent by the encryption and decryption execution platform. In the key mapping relationship, the target master key physical index corresponds to the target master key unique identifier and the target encryption machine cluster identifier.

In some examples, the key mapping relationship is synchronized in advance by the key management platform to the encryption and decryption execution platform.

In some examples, the target master key physical index is obtained by the encryption and decryption execution platform querying the key mapping relationship from the key management platform.

The encryption and decryption module 502 may be configured to decrypt the target working key ciphertext by using the first target master key, to obtain a target working key, and configured to encrypt or decrypt the data to be processed by using the target working key, to obtain result data.

In some examples, on the condition that the data to be processed includes the data to be encrypted, the result data includes ciphertext after encryption of the data to be encrypted and the target working key indication data. On the condition that the data to be processed includes the data to be decrypted, the result data includes plaintext after decryption of the data to be decrypted.

The sending module 503 may be configured to feed back the result data to the encryption and decryption execution platform.

In this embodiment of the present application, the encryption machine having the first target master key may be called by the encryption and decryption execution platform based on the key mapping relationship maintained by the key management platform, where the encryption machine uses the first target master key to decrypt the target working key ciphertext indicated by the target working key indication data in the encryption and decryption request sent by the encryption and decryption execution platform, to obtain the target working key, and uses the target working key to encrypt or decrypt the data to be processed in the encryption and decryption request, to obtain and feed back result data to the encryption and decryption execution platform. In this encryption and decryption process, the plaintext of the working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext, which may prevent the working key from being exposed in plaintext, thereby avoiding working key leakage and improving data security. Moreover, the circulation of the working key indication data between different platforms and devices enables all platforms and devices that acquire the working key indication data to have the capability to decrypt data on the basis of data security, improving the applicability of the data encryption and decryption method.

In some examples, on the condition that the data to be processed includes the data to be encrypted, the result data includes structured information; on the condition that the data to be processed includes the data to be decrypted, the data to be processed includes the structured information. The structured information includes a first field, the first field including the target working key indication data, encryption auxiliary data, and an encrypted ciphertext including the ciphertext after encryption of the data to be encrypted or the data to be decrypted.

In some examples, the encryption auxiliary data includes one or more of the following: encryption algorithm data, random vector data, encryption mode data, or encryption/decryption encoding data.

In some examples, the first field further includes check data and/or a data reserved bit. The check data includes a check value and check algorithm data.

In some examples, the structured information further includes a second field including hash data, the hash data including a hash value of a plaintext corresponding to the encrypted ciphertext.

In some examples, the structured information is implemented as a protocol message, a key-value pair or JSON structure data. The protocol message includes a protocol header and a protocol body, the protocol header including the target working key indication data and the encryption auxiliary data, and the protocol body including the encrypted ciphertext.

In some examples, the structured information is used for storage or transmission among two or more devices, the two or more devices belonging to an identical system or different systems.

In some embodiments, the encryption and decryption module 502 may be further configured to: on the condition that the first target master key is invalid or is about to become invalid, be called by the key management platform, and use the first target master key to decrypt, one by one, a working key ciphertext encrypted using the first target master key, to obtain a working key; and use a second target master key to encrypt the working key, one by one, to obtain a new working key ciphertext.

In some embodiments, the encryption and decryption module 502 may be further configured to: encrypt randomly generated plaintext data to be verified by using the working key obtained based on the working key ciphertext, to obtain ciphertext data to be verified; and verify the new working key ciphertext according to the plaintext data to be verified, the ciphertext data to be verified, the new working key ciphertext and the second target master key.

In some examples, the encryption and decryption module 502 may be specifically configured to: decrypt the new working key ciphertext by using the second target master key, to obtain the working key; decrypt the ciphertext data to be verified by using the decrypted working key, to obtain first data, and compare the first data with the plaintext data to be verified; and/or encrypt the plaintext data to be verified by using the decrypted working key, to obtain second data, and compare the second data with the ciphertext data to be verified; and on the condition that the first data is consistent with the plaintext data to be verified, and/or, the second data is consistent with the ciphertext data to be verified, determine that the new working key ciphertext is verified successfully.

In some examples, the encryption and decryption module 502 may be further configured to: on the condition that the first data is inconsistent with the plaintext data to be verified, or, the second data is inconsistent with the ciphertext data to be verified, determine that verification of the new working key ciphertext fails; on the condition that the verification of the new working key ciphertext fails, verify the plaintext data to be verified according to the plaintext data to be verified, the ciphertext data to be verified, the working key ciphertext and the first target master key; on the condition that the verification of the plaintext data to be verified fails, acquire new plaintext data to be verified that is randomly generated, and encrypt the new plaintext data to be verified by using the working key obtained based on the working key ciphertext, to obtain new ciphertext data to be verified; and verify the new working key ciphertext according to the new plaintext data to be verified, the new ciphertext data to be verified, the new working key ciphertext and the second target master key.

In some embodiments, the encryption and decryption module 502 may be further configured to: on the condition that a current time point is within a working key replacement period, decrypt the data to be decrypted by using an original working key, and encrypt the data to be encrypted by using a new working key; and on the condition that the current time point is after the working key replacement period, decrypt the data to be decrypted by using the new working key, and encrypt the data to be encrypted by using the new working key.

In some embodiments, on the condition that the encryption machine is a root encryption machine, the encryption machine 500 may further include a storage module and a synchronization module.

The storage module may be configured to store the master key. The synchronization module may be configured to determine the master key physical index of the master key in the root encryption machine as the master key unique identifier of the master key, and synchronize the master key unique identifier to the key management platform.

A fifth aspect of the present application provides a data encryption and decryption apparatus, which may be applied to an encryption and decryption execution platform, that is, the encryption and decryption execution platform may be implemented by the data encryption and decryption apparatus. FIG. 11 is a schematic structural diagram of a data encryption and decryption apparatus provided by an embodiment of the fifth aspect of the present application. As shown in FIG. 11, the data encryption and decryption apparatus 600 may include a sending module 601 and a receiving module 602.

The sending module 601 may be configured to call an encryption machine having a first target master key based on a key mapping relationship maintained by a key management platform, and send an encryption and decryption request to the encryption machine.

The key mapping relationship includes a mapping relationship of a master key unique identifier, an encryption machine cluster identifier and a master key physical index. The encryption and decryption request includes a target master key physical index, data to be processed and target working key indication data. The target master key physical index is the master key physical index of the first target master key. The data to be processed includes data to be encrypted or data to be decrypted. The target working key indication data is used to indicate a target working key ciphertext. The encryption and decryption request is used to cause the encryption machine to decrypt the target working key ciphertext by using the first target master key, to obtain a target working key, and to encrypt or decrypt the data to be processed by using the target working key, to obtain result data.

In some examples, the target working key indication data includes a target working key ciphertext index or the target working key ciphertext, the target working key ciphertext index pointing to the target working key ciphertext, and the target working key ciphertext being obtained by encrypting the target working key according to the first target master key.

In some examples, on the condition that the data to be processed includes the data to be encrypted, the result data includes ciphertext after encryption of the data to be encrypted and the target working key indication data. On the condition that the data to be processed includes the data to be decrypted, the result data includes plaintext after decryption of the data to be decrypted.

The receiving module 602 may be configured to receive the result data fed back by the encryption machine.

In this embodiment of the present application, the encryption and decryption execution platform calls an encryption machine having the first target master key based on the key mapping relationship maintained by the key management platform, and sends an encryption and decryption request to the encryption machine, the encryption and decryption request including the target master key physical index, the data to be processed, and the target working key indication data capable of indicating the target working key ciphertext. The encryption machine may decrypt the target working key ciphertext indicated by the target working key indication data by using the first target master key indicated by the target master key physical index, to obtain the target working key, and encrypt or decrypt the data to be processed by using the target working key, to obtain the result data; and the encryption and decryption execution platform receives the result data fed back by the encryption machine. In this encryption and decryption process, the plaintext of the working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext, which may prevent the working key from being exposed in plaintext, thereby avoiding working key leakage and improving data security. Moreover, the circulation of the working key indication data between different platforms and devices enables all platforms and devices that acquire the working key indication data to have the capability to decrypt data on the basis of data security, improving the applicability of the data encryption and decryption method.

In some examples, on the condition that the data to be processed includes the data to be encrypted, the result data includes structured information; on the condition that the data to be processed includes the data to be decrypted, the data to be processed includes the structured information. The structured information includes a first field, the first field including the target working key indication data, encryption auxiliary data, and an encrypted ciphertext including the ciphertext after encryption of the data to be encrypted or the data to be decrypted.

In some examples, the encryption auxiliary data includes one or more than more of the following: encryption algorithm data, random vector data, encryption mode data, or encryption/decryption encoding data.

In some examples, the first field further includes check data and/or a data reserved bit. The check data includes a check value and check algorithm data.

In some examples, the structured information further includes a second field including hash data, the hash data including a hash value of a plaintext corresponding to the encrypted ciphertext.

In some examples, the structured information is implemented as a protocol message, a key-value pair or JSON structure data. The protocol message includes a protocol header and a protocol body, the protocol header including the target working key indication data and the encryption auxiliary data, and the protocol body including the encrypted ciphertext.

In some examples, the structured information is used for storage or transmission among two or more devices, the two or more devices belonging to an identical system or different systems.

In some embodiments, the data encryption and decryption apparatus 600 may further include a calling module, and the calling module may be configured to: determine the target master key physical index based on an obtained target master key unique identifier, a target encryption machine cluster identifier, and the key mapping relationship; and determine and call the encryption machine having the first target master key according to the target master key physical index.

In some examples, the calling module may be specifically configured to: query, in the key mapping relationship synchronized in advance from the key management platform, for the master key physical index corresponding to the target master key unique identifier and the target encryption machine cluster identifier, and determine the master key physical index as the target master key physical index.

In some examples, the sending module 601 and the receiving module 602 may be configured to: query the key management platform, based on the target master key unique identifier and the target encryption machine cluster identifier, for the master key physical index corresponding to the target master key unique identifier and the target encryption machine cluster identifier in the key mapping relationship; and determine the master key physical index as the target master key physical index. In some examples, the calling module may be configured to: on the condition that a current time point is within a working key replacement period, call the encryption machine to decrypt the data to be decrypted by using an original working key, and to encrypt the data to be encrypted by using a new working key; and on the condition that the current time point is after the working key replacement period, call the encryption machine to decrypt the data to be decrypted by using the new working key, and to encrypt the data to be encrypted by using the new working key.

A sixth aspect of the present application provides a data encryption and decryption apparatus, which may be applied to a key management platform, that is, the key management platform may be implemented by the data encryption and decryption apparatus. FIG. 12 is a schematic structural diagram of a data encryption and decryption apparatus provided by an embodiment of the sixth aspect of the present application. As shown in FIG. 12, the data encryption and decryption apparatus 700 may include a communication module 701.

The communication module 701 may be configured to interact with an encryption and decryption execution platform, so that the encryption and decryption execution platform calls an encryption machine having a first target master key based on a key mapping relationship maintained by the key management platform, such that the encryption machine decrypts a target working key ciphertext indicated by target working key indication data in an encryption and decryption request by using the first target master key, to obtain a target working key, and then encrypts or decrypts data to be processed in the encryption and decryption request by using the target working key, to obtain result data fed back to the encryption and decryption execution platform.

The key mapping relationship includes a mapping relationship of a master key unique identifier, an encryption machine cluster identifier and a master key physical index. The encryption and decryption request is sent by the encryption and decryption execution platform to the encryption machine. The data to be processed includes data to be encrypted or data to be decrypted. The encryption and decryption request further includes a target master key physical index, the target master key physical index being the master key physical index of the first target master key.

The communication module 701 may include a sending unit and a receiving unit. The sending unit and the receiving unit may jointly implement the step of interacting with the encryption and decryption execution platform.

In some examples, the target working key indication data includes a target working key ciphertext index or the target working key ciphertext, the target working key ciphertext index pointing to the target working key ciphertext, and the target working key ciphertext being obtained by encrypting the target working key according to the first target master key.

In some examples, the target master key physical index is the master key physical index of the first target master key; and in the key mapping relationship, the target master key physical index corresponds to a target master key unique identifier and a target encryption machine cluster identifier.

In some examples, on the condition that the data to be processed includes the data to be encrypted, the result data includes ciphertext after encryption of the data to be encrypted and the target working key indication data; on the condition that the data to be processed includes the data to be decrypted, the result data includes plaintext after decryption of the data to be decrypted.

In the embodiment of the present application, the key management platform interacts with the encryption and decryption execution platform, so that the encryption and decryption execution platform calls an encryption machine having the first target master key based on the key mapping relationship maintained by the key management platform. The encryption and decryption execution platform sends an encryption and decryption request to the encryption machine, the encryption and decryption request including the target master key physical index, the data to be processed, and the target working key indication data capable of indicating the target working key ciphertext. The encryption machine may decrypt the target working key ciphertext indicated by the target working key indication data by using the first target master key indicated by the target master key physical index, to obtain the target working key, and encrypt or decrypt the data to be processed by using the target working key, to obtain the result data; and the encryption and decryption execution platform receives the result data fed back by the encryption machine. In the encryption and decryption process, the plaintext of the working key is obtained only when the encryption machine decrypts the working key ciphertext by using a master key when encrypting or decrypting the data to be processed. The plaintext of the working key is not transmitted between different platforms and devices. What is transmitted is the working key indication data indicating the working key ciphertext, which may prevent the working key from being exposed in plaintext, thereby avoiding working key leakage and improving data security. Moreover, the circulation of the working key indication data between different platforms and devices enables all platforms and devices that acquire the working key indication data to have the capability to decrypt data on the basis of data security, improving the applicability of the data encryption and decryption method.

In some examples, on the condition that the data to be processed includes the data to be encrypted, the result data includes structured information; on the condition that the data to be processed includes the data to be decrypted, the data to be processed includes the structured information. The structured information includes a first field, the first field including the target working key indication data, encryption auxiliary data and an encrypted ciphertext including the ciphertext after encryption of the data to be encrypted or the data to be decrypted.

In some examples, the encryption auxiliary data includes one or more of the following: encryption algorithm data, random vector data, encryption mode data, or encryption/decryption encoding data.

In some examples, the first field further includes check data and/or a data reserved bit. The check data includes a check value and check algorithm data.

In some examples, the structured information further includes a second field including hash data, the hash data including a hash value of a plaintext corresponding to the encrypted ciphertext.

In some examples, the structured information is implemented as a protocol message, a key-value pair or JSON structure data, wherein the protocol message includes a protocol header and a protocol body, the protocol header including the target working key indication data and the encryption auxiliary data, and the protocol body including the encrypted ciphertext.

In some examples, the structured information is used for storage or transmission among two or more devices, the two or more devices belonging to an identical system or different systems.

In some examples, the communication module 701 may be configured to: synchronize the key mapping relationship to the encryption and decryption execution platform; or, query, according to the target master key unique identifier and the target encryption machine cluster identifier sent by the encryption and decryption execution platform, for the target master key physical index in the key mapping relationship, and feed back the target master key physical index to the encryption and decryption execution platform.

In some embodiments, the data encryption and decryption apparatus 700 may further include a key maintenance module and a calling module.

The key maintenance module may be configured to: in response to a first input of a user, enter the master key unique identifier of a master key, the entered master key unique identifier being generated by the encryption machine; acquire the master key physical index of the master key indicated by the entered master key unique identifier and an encryption machine cluster identifier of an encryption machine cluster where the master key is located; and establish the key mapping relationship based on the master key unique identifier, the master key physical index of the master key indicated by the master key unique identifier, and the encryption machine cluster identifier of the encryption machine cluster where the master key is located.

The key maintenance module may be configured to: on the condition that the first target master key is invalid or is about to become invalid, enter a second target master key. The second target master key is generated by the encryption machine.

The calling module may be configured to: call the encryption machine to decrypt, one by one, a working key ciphertext encrypted using the first target master key, by using the first target master key, to obtain a working key; and to encrypt the working key one by one by using the second target master key, to obtain a new working key ciphertext.

In some examples, the calling module may be configured to: call the encryption machine to encrypt randomly generated plaintext data to be verified by using the working key obtained based on the working key ciphertext, to obtain ciphertext data to be verified; and verify the new working key ciphertext according to the plaintext data to be verified, the ciphertext data to be verified, the new working key ciphertext and the second target master key.

In some embodiments, the encryption machine may include a root encryption machine, the root encryption machine storing a master key. The communication module 701 may be further configured to receive the master key physical index of the master key sent by the root encryption machine. The key maintenance module may be further configured to determine the master key physical index of the master key as the master key unique identifier of the master key.

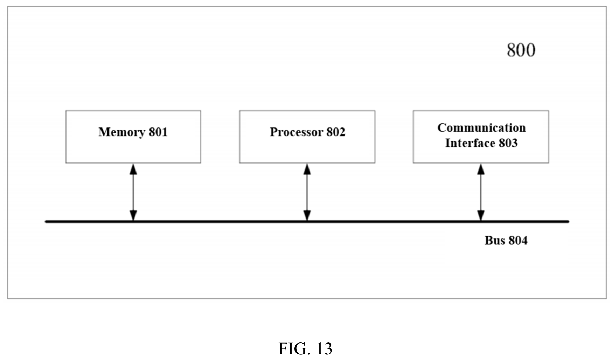

A seventh aspect of the present application further provides an electronic device, which may implement the encryption machine, the encryption and decryption execution platform, and the key management platform in the above embodiments. FIG. 13 is a schematic structural diagram of an electronic device provided by an embodiment of the seventh aspect of the present application. As shown in FIG. 13, the electronic device 800 includes a memory 801, a processor 802, and computer program instructions stored on the memory 801 and executable on the processor 802.

In some examples, the processor 802 may include a central processing unit (CPU), or an application specific integrated circuit (ASIC), or may be configured as one or more integrated circuits that implement the embodiments of the present application.

The memory 801 may include a read-only memory (ROM), a random access memory (RAM), a disk storage medium device, an optical storage medium device, a flash memory device, or an electrical, optical, or other physical/tangible memory storage device. Thus, generally, the memory includes one or more tangible (non-transitory) computer-readable storage media (e.g., memory devices) encoded with software including computer-executable instructions; and when the software is executed (e.g., by one or more processors), it is operable to perform the operations described with reference to the data encryption and decryption method according to the first aspect, the data encryption and decryption method according to the second aspect, or the data encryption and decryption method according to the third aspect in the embodiments of the present application. On the condition that the electronic device 800 implements the encryption machine in the above embodiments, when the software in the memory 801 is executed, it is operable to perform the data encryption and decryption method according to the first aspect of the present application. On the condition that the electronic device 800 implements the encryption and decryption execution platform in the above embodiments, when the software in the memory 801 is executed, it is operable to perform the data encryption and decryption method according to the second aspect of the present application. On the condition that the electronic device 800 implements the key management platform in the above embodiments, when the software in the memory 801 is executed, it is operable to perform the data encryption and decryption method according to the third aspect of the present application.

The processor 802 runs a computer program corresponding to executable program code by reading the executable program code stored in the memory 801, so as to implement the data encryption and decryption method of the first aspect, the data encryption and decryption method of the second aspect, or the data encryption and decryption method of the third aspect in the above embodiments. On the condition that the electronic device 800 implements the encryption machine in the above embodiments, the processor 802 runs the computer program corresponding to the executable program code by reading the executable program code stored in the memory 801, so as to implement the data encryption and decryption method of the first aspect in the above embodiments. On the condition that the electronic device 800 implements the encryption and decryption execution platform in the above embodiments, the processor 802 runs the computer program corresponding to the executable program code by reading the executable program code stored in the memory 801, so as to implement the data encryption and decryption method of the second aspect in the above embodiments. On the condition that the electronic device 800 implements the key management platform in the above embodiments, the processor 802 runs the computer program corresponding to the executable program code by reading the executable program code stored in the memory 801, so as to implement the data encryption and decryption method of the third aspect in the above embodiments.

In some examples, the electronic device 800 may further include a communication interface 803 and a bus 804. As shown in FIG. 13, the memory 801, the processor 802, and the communication interface 803 are connected through the bus 804 and complete communication with each other.

The communication interface 803 is mainly used to implement communication between modules, apparatuses, units and/or devices in the embodiments of the present application. Input devices and/or output devices may also be accessed through the communication interface 803.

The bus 804 includes hardware, software, or both, connecting the components of the electronic device 800 to each other. By way of example and not limitation, the bus 804 may include an accelerated graphics port (AGP) or other graphics bus, an enhanced industry standard architecture (EISA) bus, a front side bus (FSB), a HyperTransport (HT) interconnect, an industry standard architecture (ISA) bus, an InfiniBand interconnect, a low pin count (LPC) bus, a memory bus, a micro channel architecture (MCA) bus, a peripheral component interconnect (PCI) bus, a PCI-express (PCI-E) bus, a serial advanced technology attachment (SATA) bus, a video electronics standards association local bus (VLB) bus, or other suitable bus, or a combination of two or more of the above. The bus 804 may include one or more buses. Although the embodiments of the present application describe and show specific buses, the present application contemplates any suitable bus or interconnect.

An eighth aspect of the present application provides a data encryption and decryption system, which may include an encryption machine, an encryption and decryption execution platform and a key management platform.

The encryption machine is configured to execute the data encryption and decryption method of the first aspect in the above embodiments.

The encryption and decryption execution platform is in communication connection with the encryption machine, and is configured to execute the data encryption and decryption method of the second aspect in the above embodiments.

The key management platform is in communication connection with the encryption machine and the encryption and decryption execution platform, and is configured to execute the data encryption and decryption method of the third aspect in the above embodiments.

For the specific content of the encryption machine, the encryption and decryption execution platform, the key management platform and the data encryption and decryption method in the data encryption and decryption system, please refer to the relevant descriptions in the above embodiments, with the same technical effects achievable. To avoid repetition, details are not repeated here.

A ninth aspect of the present application further provides a computer-readable storage medium, on which computer program instructions are stored. When the computer program instructions are executed by a processor, the data encryption and decryption method of the first aspect, the data encryption and decryption method of the second aspect, or the data encryption and decryption method of the third aspect in the above embodiments may be implemented, and the same technical effects can be achieved. To avoid repetition, details are not repeated here. Thereof, the computer-readable storage medium may include a non-transitory computer-readable storage medium, such as read-only memory (ROM), random access memory (RAM), a magnetic disk, or an optical disc, etc., which is not limited herein.

An embodiment of the present application provides a computer program product. When instructions in the computer program product are executed by a processor of an electronic device, the electronic device is caused to execute the data encryption and decryption method of the first aspect, the data encryption and decryption method of the second aspect, or the data encryption and decryption method of the third aspect in the above embodiments, and the same technical effects can be achieved. To avoid repetition, details are not repeated here.

It should be noted that the embodiments in this specification are described in a progressive manner, and the same or similar parts of the various embodiments can be referred to each other. Each embodiment focuses on the differences from other embodiments. For the encryption machine embodiment, apparatus embodiments, electronic device embodiment, system embodiment, computer-readable storage medium embodiment, and computer program product embodiment, relevant parts may refer to the description part of the method embodiments. The present application is not limited to the specific steps and structures described in the text and shown in the drawings. Those skilled in the art may make various changes, modifications and additions, or change the order between steps after understanding the spirit of the present application. Furthermore, for the sake of brevity, detailed descriptions of known method techniques are omitted here.

The aspects of the present application have been described above with reference to flowcharts and/or block diagrams of methods, apparatuses (systems), and computer program products according to the embodiments of the present application. It should be understood that each block in the flowcharts and/or block diagrams, and combinations of blocks in the flowcharts and/or block diagrams, may be implemented by computer program instructions. Such computer program instructions may be provided to a processor of a general-purpose computer, a special-purpose computer or other programmable data processing apparatus to produce a machine, such that the instructions, when executed by the processor of the computer or other programmable data processing apparatus, enable the implementation of the functions/actions specified in one or more blocks of the flowchart and/or block diagram. Such a processor may be, but is not limited to, a general-purpose processor, a special-purpose processor, an application-specific processor, or a field-programmable logic circuit. It is also comprehensible that each block in the block diagrams and/or flowcharts, and combinations of blocks in the block diagrams and/or flowcharts, may also be implemented by dedicated hardware that performs the specified functions or actions, or may be implemented by a combination of dedicated hardware and computer instructions.

Those skilled in the art should understand that the above embodiments are all exemplary and not restrictive. Different technical features appearing in different embodiments can be combined to achieve beneficial effects. Those skilled in the art should be able to understand and implement other variations of the disclosed embodiments based on a study of the drawings, specification, and claims. In the claims, the term "comprise" or "include" does not exclude other devices or steps; the article "a" or "an" does not exclude a plurality; the terms "first" and "second" are used to indicate names and not to indicate any specific order. Any reference signs in the claims should not be construed as limiting the scope of protection. The functions of multiple parts appearing in the claims may be implemented by a single hardware or software module. The appearance of certain technical features in different dependent claims does not mean that these technical features cannot be combined to achieve beneficial effects.

## Claims

1. A data encryption and decryption method, applied to an encryption machine having a first target master key, the method comprising:
in response to being called by an encryption and decryption execution platform based on a key mapping relationship, receiving an encryption and decryption request sent by the encryption and decryption execution platform, wherein:
the key mapping relationship is maintained by a key management platform, and comprises a mapping relationship of a master key unique identifier, an encryption machine cluster identifier, and a master key physical index; and
the encryption and decryption request comprises a target master key physical index, data to be processed, and target working key indication data, the target master key physical index being a master key physical index of the first target master key, the data to be processed comprising data to be encrypted or data to be decrypted, and the target working key indication data being used to indicate a target working key ciphertext;
decrypting the target working key ciphertext using the first target master key, to obtain a target working key;
encrypting or decrypting the data to be processed using the target working key, to obtain result data; and
feeding back the result data to the encryption and decryption execution platform.

2. The method according to claim 1, wherein the target working key indication data comprises a target working key ciphertext index or the target working key ciphertext, the target working key ciphertext index pointing to the target working key ciphertext, and the target working key ciphertext being obtained by encrypting the target working key according to the first target master key.

3. The method according to claim 1, wherein the being called by the encryption and decryption execution platform based on the key mapping relationship comprises:
being called by the encryption and decryption execution platform based on an obtained target master key unique identifier, a target encryption machine cluster identifier, and the key mapping relationship, wherein, in the key mapping relationship, the target master key physical index corresponds to the target master key unique identifier and the target encryption machine cluster identifier.

4. The method according to claim 3, wherein, the key mapping relationship is synchronized in advance by the key management platform to the encryption and decryption execution platform; or
the target master key physical index is obtained by the encryption and decryption execution platform querying the key mapping relationship from the key management platform.

5. The method according to claim 1, wherein, on the condition that the data to be processed comprises the data to be encrypted, the result data comprises ciphertext after encryption of the data to be encrypted and the target working key indication data; and
on the condition that the data to be processed comprises the data to be decrypted, the result data comprises plaintext after decryption of the data to be decrypted.

6. The method according to claim 1, wherein:
on the condition that the data to be processed comprises the data to be encrypted, the result data comprises structured information;
on the condition that the data to be processed comprises the data to be decrypted, the data to be processed comprises the structured information;
wherein the structured information comprises a first field, the first field comprises the target working key indication data, encryption auxiliary data, and an encrypted ciphertext, the encrypted ciphertext comprising the ciphertext after encryption of the data to be encrypted or the data to be decrypted.

7. The method according to claim 6, wherein the encryption auxiliary data comprises one or more of the following:
encryption algorithm data, random vector data, encryption mode data, or encryption/decryption encoding data.

8. The method according to claim 6, wherein the first field further comprises check data and/or a data reserved bit;
wherein the check data comprises a check value and check algorithm data.

9. The method according to claim 6, wherein the structured information further comprises a second field comprising hash data, the hash data comprising a hash value of a plaintext corresponding to the encrypted ciphertext.

10. The method according to claim 6, wherein the structured information is implemented as a protocol message, a key-value pair, or JSON structure data; wherein the protocol message comprises a protocol header and a protocol body, the protocol header comprising the target working key indication data and the encryption auxiliary data, and the protocol body comprising the encrypted ciphertext.

11. The method according to claim 6, wherein the structured information is used for storage and/or transmission among two or more devices belonging to an identical system or different systems.

12. The method according to claim 1, further comprising: on the condition that the first target master key is invalid or is about to become invalid, in response to being called by the key management platform, using the first target master key to decrypt, one by one, a working key ciphertext encrypted using the first target master key, to obtain a working key; and
using a second target master key to encrypt the working key, one by one, to obtain a new working key ciphertext.

13. The method according to claim 12, further comprising:
encrypting randomly generated plaintext data to be verified by using the working key obtained based on the working key ciphertext, to obtain ciphertext data to be verified; and
verifying the new working key ciphertext according to the plaintext data to be verified, the ciphertext data to be verified, the new working key ciphertext and the second target master key.

14. The method according to claim 13, wherein the verifying the new working key ciphertext according to the plaintext data to be verified, the ciphertext data to be verified, the new working key ciphertext, and the second target master key comprises:
decrypting the new working key ciphertext by using the second target master key, to obtain the working key;
decrypting the ciphertext data to be verified by using the decrypted working key, to obtain first data, and comparing the first data with the plaintext data to be verified; and/or encrypting the plaintext data to be verified by using the decrypted working key, to obtain second data, and comparing the second data with the ciphertext data to be verified; and
on the condition that the first data is consistent with the plaintext data to be verified, and/or, the second data is consistent with the ciphertext data to be verified, determining that the new working key ciphertext is verified successfully.

15. The method according to claim 14, further comprising:
on the condition that the first data is inconsistent with the plaintext data to be verified, or, the second data is inconsistent with the ciphertext data to be verified, determining that verification of the new working key ciphertext fails;
on the condition that the verification of the new working key ciphertext fails, verifying the plaintext data to be verified according to the plaintext data to be verified, the ciphertext data to be verified, the working key ciphertext and the first target master key;
on the condition that the verification of the plaintext data to be verified fails, acquiring new plaintext data to be verified that is randomly generated, and encrypting the new plaintext data to be verified by using the working key obtained based on the working key ciphertext, to obtain new ciphertext data to be verified; and
verifying the new working key ciphertext according to the new plaintext data to be verified, the new ciphertext data to be verified, the new working key ciphertext and the second target master key.

16. The method according to claim 1, further comprising:
on the condition that a current time point is within a working key replacement period, decrypting the data to be decrypted by using an original working key, and encrypting the data to be encrypted by using a new working key; and
on the condition that the current time point is after the working key replacement period, decrypting the data to be decrypted by using the new working key, and encrypting the data to be encrypted by using the new working key.

17. The method according to claim 1, further comprising:
on the condition that the encryption machine is a root encryption machine, storing a master key; and
determining the master key physical index of the master key in the root encryption machine as the master key unique identifier of the master key, and synchronizing the master key unique identifier to the key management platform.

18. A data encryption and decryption method, applied to an encryption and decryption execution platform, the method comprising:
calling an encryption machine having a first target master key based on a key mapping relationship maintained by a key management platform, the key mapping relationship comprising a mapping relationship of a master key unique identifier, an encryption machine cluster identifier, and a master key physical index;
sending an encryption and decryption request to the encryption machine, wherein the encryption and decryption request comprises a target master key physical index, data to be processed, and target working key indication data, the target master key physical index being the master key physical index of the first target master key, the data to be processed comprising data to be encrypted or data to be decrypted, the target working key indication data being used to indicate a target working key ciphertext, and the encryption and decryption request being used to cause the encryption machine to decrypt the target working key ciphertext using the first target master key to obtain a target working key, and to encrypt or decrypt the data to be processed using the target working key to obtain result data; and
receiving the result data fed back by the encryption machine.

19. The method according to claim 18, wherein the target working key indication data comprises a target working key ciphertext index or the target working key ciphertext, the target working key ciphertext index pointing to the target working key ciphertext, and the target working key ciphertext being obtained by encrypting the target working key according to the first target master key.

20. The method according to claim 18, wherein the calling the encryption machine having the first target master key based on the key mapping relationship maintained by the key management platform comprises:
determining the target master key physical index based on an obtained target master key unique identifier, a target encryption machine cluster identifier, and the key mapping relationship; and
determining and calling the encryption machine having the first target master key according to the target master key physical index.

21. The method according to claim 20, wherein the determining the target master key physical index based on the obtained target master key unique identifier, the target encryption machine cluster identifier and the key mapping relationship comprises:
querying, in the key mapping relationship synchronized in advance from the key management platform, for the master key physical index corresponding to the target master key unique identifier and the target encryption machine cluster identifier, and determining the master key physical index as the target master key physical index; or
querying the key management platform, based on the target master key unique identifier and the target encryption machine cluster identifier, for the master key physical index corresponding to the target master key unique identifier and the target encryption machine cluster identifier in the key mapping relationship, and determining the master key physical index as the target master key physical index.

22. The method according to claim 18, wherein:
on the condition that the data to be processed comprises the data to be encrypted, the result data comprises ciphertext after encryption of the data to be encrypted and the target working key indication data; and
on the condition that the data to be processed comprises the data to be decrypted, the result data comprises plaintext after decryption of the data to be decrypted.

23. The method according to claim 18, wherein:
on the condition that the data to be processed comprises the data to be encrypted, the result data comprises structured information;
on the condition that the data to be processed comprises the data to be decrypted, the data to be processed comprises the structured information;
wherein the structured information comprises a first field, the first field comprises the target working key indication data, encryption auxiliary data and an encrypted ciphertext, the encrypted ciphertext comprising ciphertext after encryption of the data to be encrypted or the data to be decrypted.

24. The method according to claim 23, wherein the encryption auxiliary data comprises one or more of the following:
encryption algorithm data, random vector data, encryption mode data, or encryption/decryption encoding data.

25. The method according to claim 23, wherein the first field further comprises check data and/or a data reserved bit; wherein the check data comprises a check value and check algorithm data.

26. The method according to claim 23, wherein the structured information further comprises a second field comprising hash data, the hash data comprising a hash value of a plaintext corresponding to the encrypted ciphertext.

27. The method according to claim 23, wherein the structured information is implemented as a protocol message, a key-value pair or JSON structure data;
wherein the protocol message comprises a protocol header and a protocol body, the protocol header comprising the target working key indication data and the encryption auxiliary data, and the protocol body comprising the encrypted ciphertext.

28. The method according to claim 23, wherein the structured information is used for storage or transmission among two or more devices, the two or more devices belonging to an identical system or different systems.

29. The method according to claim 18, further comprising:
on the condition that a current time point is within a working key replacement period, calling the encryption machine to decrypt the data to be decrypted by using an original working key, and to encrypt the data to be encrypted by using a new working key; and
on the condition that the current time point is after the working key replacement period, calling the encryption machine to decrypt the data to be decrypted by using the new working key, and to encrypt the data to be encrypted by using the new working key.

30. A data encryption and decryption method, applied to a key management platform, the method comprising:
interacting with an encryption and decryption execution platform, so that the encryption and decryption execution platform calls an encryption machine having a first target master key based on a key mapping relationship maintained by the key management platform, such that the encryption machine decrypts a target working key ciphertext indicated by target working key indication data in an encryption and decryption request by using the first target master key, to obtain a target working key, and then encrypts or decrypts data to be processed in the encryption and decryption request by using the target working key, to obtain result data fed back to the encryption and decryption execution platform,
wherein the key mapping relationship comprises a mapping relationship of a master key unique identifier, an encryption machine cluster identifier and a master key physical index, the encryption and decryption request is sent by the encryption and decryption execution platform to the encryption machine, the data to be processed comprises data to be encrypted or data to be decrypted, and the encryption and decryption request further comprises a target master key physical index, the target master key physical index being the master key physical index of the first target master key.

31. The method according to claim 30, wherein the target working key indication data comprises a target working key ciphertext index or the target working key ciphertext, the target working key ciphertext index pointing to the target working key ciphertext, and the target working key ciphertext being obtained by encrypting the target working key according to the first target master key.

32. The method according to claim 30, further comprising:
in response to a first input of a user, entering a master key unique identifier of a master key, the entered master key unique identifier being generated by the encryption machine;
acquiring a master key physical index of the master key indicated by the entered master key unique identifier and an encryption machine cluster identifier of an encryption machine cluster where the master key is located; and
establishing the key mapping relationship based on the master key unique identifier, the master key physical index of the master key indicated by the master key unique identifier, and the encryption machine cluster identifier of the encryption machine cluster where the master key is located.

33. The method according to claim 30, wherein in the key mapping relationship, the target master key physical index corresponds to a target master key unique identifier and a target encryption machine cluster identifier.

34. The method according to claim 33, wherein the interacting with the encryption and decryption execution platform comprises:
synchronizing the key mapping relationship to the encryption and decryption execution platform; or,
querying, according to the target master key unique identifier and the target encryption machine cluster identifier sent by the encryption and decryption execution platform, for the target master key physical index in the key mapping relationship, and feeding back the target master key physical index to the encryption and decryption execution platform.

35. The method according to claim 30, wherein:
on the condition that the data to be processed comprises the data to be encrypted, the result data comprises ciphertext after encryption of the data to be encrypted and the target working key indication data; and
on the condition that the data to be processed comprises the data to be decrypted, the result data comprises plaintext after decryption of the data to be decrypted.

36. The method according to claim 30, wherein:
on the condition that the data to be processed comprises the data to be encrypted, the result data comprises structured information; and
on the condition that the data to be processed comprises the data to be decrypted, the data to be processed comprises the structured information;
wherein the structured information comprises a first field, the first field comprising the target working key indication data, encryption auxiliary data, and an encrypted ciphertext, and the encrypted ciphertext comprising the ciphertext after encryption of the data to be encrypted or the data to be decrypted.

37. The method according to claim 36, wherein the encryption auxiliary data comprises one or more of the following:
encryption algorithm data, random vector data, encryption mode data, or encryption/decryption encoding data.

38. The method according to claim 36, wherein the structured information further comprises check data and/or a data reserved bit;
wherein the check data comprises a check value and check algorithm data.

39. The method according to claim 36, wherein the structured information further comprises a second field comprising hash data, the hash data comprising a hash value of a plaintext corresponding to the encrypted ciphertext.

40. The method according to claim 36, wherein the structured information is implemented as a protocol message, a key-value pair or JSON structure data;
wherein the protocol message comprises a protocol header and a protocol body, the protocol header comprising the target working key indication data and the encryption auxiliary data, and the protocol body comprising the encrypted ciphertext.

41. The method according to claim 36, wherein the structured information is used for storage or transmission among two or more devices, the two or more devices belonging to an identical system or different systems.

42. The method according to claim 30, further comprising:
on the condition that the first target master key is invalid or is about to become invalid, entering a second target master key, wherein the second target master key is generated by the encryption machine; and
calling the encryption machine to decrypt, one by one, a working key ciphertext encrypted using the first target master key, by using the first target master key, to obtain a working key, and to encrypt the working key one by one by using the second target master key, to obtain a new working key ciphertext.

43. The method according to claim 42, further comprising:
calling the encryption machine to encrypt randomly generated plaintext data to be verified by using the working key obtained based on the working key ciphertext, to obtain ciphertext data to be verified; and
verifying the new working key ciphertext according to the plaintext data to be verified, the ciphertext data to be verified, the new working key ciphertext and the second target master key.

44. The method according to claim 30, wherein the encryption machine comprises a root encryption machine storing a master key,
the method further comprising:
receiving the master key physical index of the master key sent by the root encryption machine, and determining the master key physical index of the master key as the master key unique identifier of the master key.

45. An encryption machine having a first target master key, the encryption machine comprising:
a receiving module, configured to be called by an encryption and decryption execution platform based on a key mapping relationship, and receive an encryption and decryption request sent by the encryption and decryption execution platform, wherein the key mapping relationship is maintained by a key management platform, and comprises a mapping relationship of a master key unique identifier, an encryption machine cluster identifier and a master key physical index, the encryption and decryption request comprising a target master key physical index, data to be processed and target working key indication data, and the target master key physical index being the master key physical index of the first target master key, wherein the data to be processed comprise data to be encrypted or data to be decrypted, and the target working key indication data is used to indicate a target working key ciphertext;
an encryption and decryption module, configured to decrypt the target working key ciphertext by using the first target master key, to obtain a target working key, and configured to encrypt or decrypt the data to be processed by using the target working key, to obtain result data; and
a sending module, configured to feed back the result data to the encryption and decryption execution platform.

46. A data encryption and decryption apparatus applied to an encryption and decryption execution platform, the apparatus comprising:
a sending module, configured to call an encryption machine having a first target master key based on a key mapping relationship maintained by a key management platform, and send an encryption and decryption request to the encryption machine, wherein the key mapping relationship comprises a mapping relationship of a master key unique identifier, an encryption machine cluster identifier and a master key physical index, the encryption and decryption request comprises a target master key physical index, data to be processed and target working key indication data, the target master key physical index being the master key physical index of the first target master key, the data to be processed comprising data to be encrypted or data to be decrypted, the target working key indication data being used to indicate a target working key ciphertext, wherein the encryption and decryption request is used to cause the encryption machine to decrypt the target working key ciphertext by using the first target master key, to obtain a target working key, and to encrypt or decrypt the data to be processed by using the target working key, to obtain result data; and
a receiving module, configured to receive the result data fed back by the encryption machine.

47. A data encryption and decryption apparatus applied to a key management platform, the apparatus comprising:
a communication module, configured to interact with an encryption and decryption execution platform, so that the encryption and decryption execution platform calls an encryption machine having a first target master key based on a key mapping relationship maintained by the key management platform, such that the encryption machine decrypts a target working key ciphertext indicated by target working key indication data in an encryption and decryption request by using the first target master key, to obtain a target working key, and then encrypts or decrypts data to be processed in the encryption and decryption request by using the target working key, to obtain result data fed back to the encryption and decryption execution platform,
wherein the key mapping relationship comprises a mapping relationship of a master key unique identifier, an encryption machine cluster identifier and a master key physical index, the encryption and decryption request being sent by the encryption and decryption execution platform to the encryption machine, and the data to be processed comprising data to be encrypted or data to be decrypted, wherein the encryption and decryption request further comprises a target master key physical index, the target master key physical index being the master key physical index of the first target master key.

48. An electronic device, comprising:
a processor and a memory storing computer program instructions;
wherein the processor, when executing the computer program instructions, implements the data encryption and decryption method as recited in any one of claims 1 to 44.

49. A data encryption and decryption system, comprising:
an encryption machine, configured to execute the data encryption and decryption method as recited in any one of claims 1 to 17;
an encryption and decryption execution platform in communication connection with the encryption machine, configured to execute the data encryption and decryption method as recited in any one of claims 18 to 29; and
a key management platform in communication connection with the encryption machine and the encryption and decryption execution platform, configured to execute the data encryption and decryption method as recited in any one of claims 30 to 44.

50. A computer-readable storage medium, wherein the computer-readable storage medium stores computer program instructions, and when the computer program instructions are executed by a processor, the data encryption and decryption method as recited in any one of claims 1 to 44 is implemented.
